# EUROPEAN PATENT APPLICATION

(11) **EP 2 372 530 A1**
(43) Date of publication of application: **05.10.2011**
(21) Application number: 09828544.8
(22) Date of filing: 30.11.2009
(51) Int. Cl.: G06F 9/38

(54) **DATA PROCESSING METHOD AND DEVICE**

(30) Priority: 28.11.2008 CN 200810203778; 28.11.2008 CN 200810203777; 11.02.2009 CN 200910046117; 29.09.2009 CN 200910208432
(71) Applicant: Shanghai Xinhao Micro-Electronics Co. Ltd., Shanghai 200092 (CN)
(72) Inventor: LIN, Kenneth, Chenghao, Shanghai 200092 (CN)
(74) Representative: Trinks, Ole
(86) International application number: PCT/CN2009/001346
(87) International publication number: WO 2010/060283

(57) **Abstract**

A data processing method and device are provided, in which the program codes running on the multi-processor core structure in serial connection are divided in accordance with particular rules, so that the serial multi-issue and pipeline hierarchy can be constructed by the multi-processor core structure in serial connection, and the time which each of cores needs to execute the corresponding code segment obtained by division is equal to each other as possible, thereby the load balance among cores can be realized.

## Description

### Technical Field

The present invention general relates to the field of integrated circuit design.

### Background Art

Tracking the Moore's Law, the feature size of transistors shrinks following steps of 65nm, 45nm, and 32nm ... thus the number of transistors integrated on a single chip have exceeded a billion by now. However, there is no significant breakthrough on EDA tools for the last 20 years ever since the introduction of logic synthesize, place and route tools which improved the back-end IC design productivity in the 80's of the last century. This phenomenon makes the front-end IC design, especially the verification, increasingly difficult to handle the increasing scale of a single chip. Therefore, design companies are shifting towards multi-core processor, i.e., a chip includes multiple relatively simple cores, to lower the difficulty of chip design and verification while gaining performance from the chip.

Conventional muiti-core processors integrate a number of processor cores for parallel program execution to improve chip performance. Thus, for these conventional multi-core processors, parallel programming may be required to make full use of the processing resources. However, the operating system does not have fundamental changes in its avocation and management of resources, and general allocates the resources equally in a symmetrical manner. Thus, although the number of processor cores may perform parallel computing, for a single program thread, its serial execution nature makes the conventional multi-core structure impossible to realize true pipelined operations. Further, current software still includes a large amount of programs that require serial execution. Therefore, when the number of processor cores reaches a certain value, the chip performance cannot be further increased by increasing the number of the processor cores. In addition, with the continuous improvement on the semiconductor manufacturing process, the internal operating frequency of multi-core processors have been much higher than the operating frequency of the external memory. Simultaneous memory access by multiple processor cores has become a major bottleneck for the chip performance, and the multi-core in parallel structure executing programs which are in serial by nature may not realize the expected chip performance gains.

### Summary of invention

In light of the limitation of current techniques, the present invention discloses data processing method and Structure which is capable of high speed execution of serially executed program to increase the throughput.

The disclosed systems and methods including: dividing the program code into segments following certain rules, such that the execution time of segmented code segment on each of the process core in the in serial connected multi-core processor structure will be approximate the same to balance the workload amongst the cores (load balancing). The serial connection multi-processor structure may include a plural number of processing cores. A processor core, as used herein, may refer to any appropriate processing unit capable of performing operations and data read/write through executing instructions. It may include (but not limited to) central processing unit (CPU) and a digital signal processor (DSP).

The present disclosure provides a multi-core processor structure in which processor cores are connected to each other in serial to form in-serial multi-issue. In a given unit time, each core in the serially connecting multi-core structure may issue a singular or plural number of instructions, and a plural number of cores which are serially connected together may form an even larger scale of multiple instruction issuing at a given time, and this is the in-serial multi-issue,

The present disclosure forms a pipeline hierarchy through the serial connecting multi-core processor structure, in which the first stage of the pipeline is the pipeline internal to each core in this serial connecting multi-core processor structure, and the second level of the macro pipeline is formed by using each core as a macro pipeline stage in this serial connection muiti-core processor structure. It can be further deduced to an even higher level hierarchy. For example, the serial connecting multi-core processor structure can be treated as a pipeline stage to form a third level of an even higher level pipeline.

The singular or plural code segments used in the cores in the serial connecting multi-core processor are generated by partly or fully employing the following three steps which are pre-compling, compiling, and post- compiling. The program may include (but not limited to) high-level language program and assembly language program.

Compiling, as used herein, may generally refer to a process to convert source code of the computer program into object code,

During pre-compiling processing, the source code of the computer program is pre-processed for the subsequent compiling process. During pre-compiling processing, the "call" sentence may be expanded such that the call sentence itself is substituted by the code section called, thus no call sentence remains in the program code. Such call may include (but not limited to) a function call

During post-compiling, the object code may be segmented into a plural number of code segments dependent on the type and workload of operations in each processor core, and the code segments may be further allocated to corresponding processor cores. The steps may include (but are not limited to) as follows:
(a) Analyzing executable program code to generate front-end code stream.
(b) The front-end code stream running in the operation model may be scanned to obtain statistics such as execution cycles needed, any jump/branch and the jump/branch addresses, etc. These and other statistics may then be analyzed to determine segment information. The segment information can also be determined by a preset marker without scanning the front-end code stream, The operation model includes (but not limited to) the behavior model of the interconnected processor cores and/or the multi-core processor.
(c) Based on this information the code is parsed into corresponding code segments for each core in the serially connecting multi-core processor structure.

It is understood that the pre-compiling processing may be performed before compiling the source code, performed by a compiler as part of the compiling process on the source code, or performed in real-time by an operating system of the multi-core processor, a driver, or an application program during operation of the serially-interconnected processor cores or the multi-core processor.

Also, the post-compiling may be performed after compiling the source code, performed by a compiler as part of the compiling process on the source code, or performed in real-time by an operating system of the multi-core processor, a driver, or an application program during operation of the serially-interconnected processor cores or the multi-core processor. When the post-compiling is performed in real-time, the segment information may be determined by program, based on the workload of the multi-core processor, or based on the fixed configured information.

The deferment segments of code may be allocated to different processor cores, and executed at the same time. Thus, the performance of the multi-core processor may be improved significantly while maintaining software compatibility. This effectively solves the low efficiency problem of current multi-core processors in running application program.

During post-compiling, the configuration information may be determined based on the information which includes (but not limited to) the number of instruction execution cycles or time, and/or the number of the instructions. Based on the instruction execution cycles or time, the object code may be segmented into a plural number of code segments with equal or similar execution cycles or time. Or based on the number of the instructions, the object code may be segmented into a plural number of code segments with equal or similar number of instructions.

During post-compiling, it may be desired to avoid segmenting the program loops, i.e., keeping an entire loop in a single code segment. However, under certain circumstances, the program loop segmentation is inevitable. When one code segment includes a loop and when the result of count times the instruction number of the loop is greater than an available execution cycle of the code segment, the loop is further divided into plural smaller scale sub-loops, which may have the same or partially different code segment. The sub-bop has the features that include (but not limited to) less instruction numbers, and/or less execution cycles.

Each segment allocated to a particular processor core may be defined by certain segment information, such as the number of instructions, specific marker of segment boundaries, and a listing table of starting information of the code segment, etc.

For example, if the multi-core processor includes 1000 processor cores, a table with 1000 entries may be created based or the maximum number of processor cores. Each entry includes position information of the corresponding code segment, i.e., the position of the code segment in the original un-segmented code stream. The position may be a starting position or an end position, and the code segment between two positions is the code segment for the particular processor core. If all of the 1000 processor cores are operating, each processor core is thus configured to execute a code segment between the two positions of the code stream. If only N number of processor cores are operating (N <1000), each of the N processor cores is configured to execute the corresponding 1000/N code segments as determined by the corresponding position information in the table.

Each code segment may include additional code. The additional code may include certain extension at the beginning of the code segment and at the end of the code segment to achieve a smooth transition between the instruction executions in different processor cores. For example, the code segment may be added an extension at the end to store all values of the register file in a specific vocation of the data memory. The code segment may also be added an extension at the beginning to read the stored values from the specific location of the data memory to the register file such that values of the register files of different processor cores may be passed from one another to ensure correct code execution. After a processor core executes the end of the corresponding code segment, processor core may execute from the beginning of the same code segment.

Based on the present disclosure, a configurable multi-core structure for executing a program in a serial multi-issue and pipelined manner may be provided. The configurable multi-core structure includes a plural number of processor cores and a plural number of configurable local memory respectively associated with the plural number of processor cores, and a plural number of configurable interconnect structures for serially interconnnecting the plural number of processor cores.

A processor core, as used herein, may be configured to perform operations and data read/write through executing instructions.

Configurable local memory may be configured to store instructions and data, to exchange data between processor cores.

Configurable interconnecting modules may be configured to interconnect the plural number of processor cores into different configurations or groups.

Further, other components may also be included in the configurable interconnect structures for broader application, which include (but not limited to) partly or entirely of the modules as follows:
Shared memory for slaving data in case of overflow of the configurable local memory and for transferring shared data between the processor cores;
Direct memory access (DMA) for directing access to the configurable local memory by other modules in addition to the processor cores; and
Exception handing modules for handing exceptions in processor cores and configurable local memory.

Each processor core may include one or more execution units, a program counter, and other components, such as a register file. The processor core may execute any appropriate type of instructions, such as arithmetic instructions, logic instructions, conditional branch and jump instructions, and exception trap and return instructions. The arithmetic instructions and logical instructions may include any instructions for arithmetic and/or logic operations, such as multiplication, addition/subtraction, multiplication-addition/subtraction, accumulating, shifting, extracting, exchanging, etc., and any appropriate fixed-point and floating point operations. The number of processor cores included in the serially-interconnected or parallelly-connected processor cores may be determined based on particular applications.

Each processor core is associated with a configurable local memory including instruction memory and configurable data memory for storing code segments allocated for a particular processor core as well as any data.

In the same configurable local memory, the boundary between the instruction memory and configurable data memory may be changed based on configuration information. Further, the configurable data memory may be configured into multiple sub-modules after the size and boundary of the configurable data memory is determined.

In the same configurable local memory, based on the configurable information, the boundary of the data sub-memories may be changed. The data sub-memories may map to the entire address of the multi-core processor. The mapping method includes (but not limited to) indexing by a lockup table, and/or indexing by CAM matching.

In the data sub-memory, every entry may contain data and flag information. The flag information includes (but not limited to) a valid bit and address information to be used to indicate a position of entire address space of the multi-core structure.

In the configurable multi-core structure based on in serial-issue and pipeline hierarchy structure, the configurable interconnect modules is used to connect the internal modules and external modules by configuration. It includes (but not limited to) the connection between processor cores and their adjacent configurable local memory, the connection between processor cores and shared memory, the connection between processor cores and DMA, the connection between configurable local memory and shared memory, the connection between configurable local memory and DMA, the connection between configurable local memory and external modules of the structure and the connection between shared memory and external modules of the structure.

Two processor cores along with associated local memories may be formed as previous and current stage structure based on configuration information, which includes (but not limited to) transferring data from the configurable data memory associated to the previous stage processor core to the configurable data memory associated to the current stage processor core.

Depending on the requirement of application program, part or all processor cores and their associated local memories may be configured as a singular or a plural number of serial connecting structure through configurable interconnecting modules. Multiple serial connection structure may be independent with each other, and may be in part or in all relate to each other executing programs in serial, in parallel or in a mixed serial and parallel manner. Depending on specification of application program, the instruction execution includes (but not limited to) the following: under the control of a synchronous mechanism, different serial-connecting structures execute different program segments in a multi-thread manner, or different serial- connecting structures execute the same program segment with different data inputs in a Single Instruction Multiple Data stream (SIMD) manner for execution-heavy operations.

In the configurable multi-core structure based on in serial-issue and pipeline hierarchy structure, the processor cores in serial-connecting structure may include specific read policy and write policy.

The data read policy, that is the data input source of the first processor core in the serial-connecting structure which includes (but not limited to) the associated configurable data memory, shared memory and the external modules of the multi-core structure. The source for data input to the other processor cores include (but not limited to) one of the first configurable local memory, the configurable local memory of the previous stage processor core. Similarly, a second destination for data output from the previous stage processor core include (but not limited to) the other configurable local memory and the shared memory. When the extension memory is present in the structure, the destination for data output may include extension memory.

The data write policy, that is the data input source of the configurable data memory associated with first processor core in the serial-connecting structure may include (but not limited to) the associated configurable data memory, shared memory and the external modules of the multi-core structure. The source for data input to configurable data memory associated with the other processor cores includes (but not limited to) one of the configurable local memories, the configurable local memory of the previous stage processor core and shared memory. A plural number of multiplexers to select the first and second sources for data input to the processor cores and associated configurable memories.

A configurable data memory can be accessed by processor cores at two stages of the macro pipeline, and different processor cores can access different sub-modules of the configurable data memory, Such access may be facilitated by a specific rule to define different accesses by the different processor cores. For example, the specific rule may define the sub-modules of the configurable data memory as ping-pong buffers, where the sub-modules are visited by two different processor cores and after the processor cores completed the accessed, a ping-pong buffer exchange is performed to mark the sub-module accessed by the previous stage processor core as the sub-module to be accessed by the current stage processor core, and to mark the sub-module accessed by the current stage processor core as invalid such that the previous stage processor core can access.

Each of the processor cores includes a register file, and values of registers in the register file of the previous stage processor core is transferred to corresponding registers in the register file of the current stage processor core during operation. The values of register includes (but not limited to) register values in the register file of processor cores. The transferring path of register data includes (but not limited to) transferring through configurable interconnecting structure, transferring through shared memory directly, transferring through the associated configurable data memory of the processor core directly, transferring through shared memory based on special instructions and transferring through the associated configurable data memory of the processor core based on special instructions.

In the configurable multi-core structure, the second level of hierarchy pipeline is controlled by a back-pressure signal passed between two neighboring stage of the macro pipeline and passes the back pressure signal to a processor core at a previous stage to determine whether a previous stage is stalled; and according to its operation condition, determine whether the current stage pipeline is stalled, thus, the operation of the macro pipeline may be controlled.

In the niulti-core structure, it includes extension shared memory for storing data when the data overflow of the associated data memory of the processor cores is occurring and transferring shared data among a plural number of processor cores, It further includes extension exception handling modules for handling exception in processor cores and local memories.

When the multi-core structure has shared memory and the data overflow occurred when storing data into the configurable data memory, an exception will be generated and data will be stored into shared memory. The flag information in every entry of the sub-memory includes (but not limited to) valid bit for indicating whether the stored data in associated entry is valid, and address information and data tag for indicating a position of entire address space of the multi-core structure.

All of the exception information generated by processor cores is transferred to exception handling module and all the information is handled by exception handling module. The exception handling module may consist of processor cores in the multi-core structure and additional modules. The exception information include (but not limited to) the number of exception occurring processor core and the type of the exceptions. The exception handling of the processors and/or local memories may include (but are not limited to) transferring the pipeline stall information to processor cores in the serial-connecting structure through back pressure signal.

In the configurable multi-core structure, the processor cores, configurable local memories and configurable interconnecting structure may be configured based on the requirement of application program. The configuration information includes (but not limited to) power up or down of processor cores, configuring the size/boundary and content of instruction memory and data sub-memory in local memory and configuring the interconnection structure.

The source of the configuration information may come from the internal and/or the external of the configurable multi-core structure. According to the requirement of application program, the configuration may be adjusted at any time during program execution. The configuration method includes (but not limited to) configuring by processor cores and CPU cores directly, configuring through DMA controller by processor cores or CPU cores and configuring through DMA controller by external request.

The configurable multi-core structure has low-power consumption technology in three levels of hierarchies: a configuration level power management, an instruction level power management and an application level power management.

The power management at configuration level is that a core is put into low power state by configuration information when it is not in use. The low-power state include (but are not limited to) reducing the processor clock frequency or cutting off the power supply to the processor core.

At the instruction level, when a processor core executes an instruction to read data, if the data is not ready, the processor core can be place into a low-powder state until the data is ready. The condition of data not ready includes (but not limited to) an previous stage processor core has not written data required by the current stage processor core in certain data memory. The current stage processor core may be put into the low-power state, such as reducing the processor clock frequency or cutting off the power supply to the processor core.

At the application level, idle task feature matching may be used to determine a current utilization rate of a processor core. The utilization rate may be compared with a standard utilization rate to determine whether to enter a low-power state or whether to return from a low-power state. The standard utilization rate may be fixed, reconfigurable, or adaptively-learned during operation. The standard utilization rate may also be fixed inside the chip, written into the processor core during startup, or whiten by a software program. The content of the idle task may be fixed inside the chip, written during startup or by the software program, or adaptively-learned during operation. The write mode may be single write and multiple writes; the memory includes (but not limited to) volatile memory and nonvolatile memory. The low-power state include (but are not limited to) reducing the processor clock frequency or cutting off the power supply to the processor core.

In the configurable multi-core structure, a self-testing facility may perform self-test at power up rather than rely on the external equipments.

When the structure has self-test facility, a singular number of or a plural number of particular basic components, operation units or processor cores may be used as comparators and a particular stimulation with particular relationship may be applied to a plural set of the other basic component, function units or processor cores. The comparators compare whether the outputs of the other basic component, function units or processor cores in the structure satisfy specific conditions. The stimulation may come from the special modules in multi-core structure or external devices. The specific conditions include (but are not limited to) equal, opposite, reciprocal, and complementary. The outputs/results may be stored in memory of the processor cores or may be transferred to outside of the processor cores.

Such self-testing may be performed during wafer testing, integrated circuit testing after packaging, or multi-core chip testing during power-on. The self-testing can also be performed under various pre-configured testing conditions and testing periods, and periodical self-testing can be performed during operation. The memory used in self-testing includes (but not limited to) volatile memory and nonvolatile memory.

The multi-core structure may have self-repair capability based on self-testing facility. Any mal-function processor core is marked as invalid when the testing results are stored in the memory. The self-repair are perform by bypassing the invalid processor core during configuration. Such self-repair may be performed during wafer testing, integrated circuit testing after packaging, or multi-core chip power-on. Thus allow the valid processor cores function normally. Self-repair can also be performed during operation under a pre-set testing/self-repair condition and period.

The plural number of processor cores in this disclosure may be of the same processor architecture or be in different architecture.

The instruction word in this disclosure may be of variable length.

The local instruction memory and data memory in this disclosure may have a singular or a plural number of read ports respectively,

Each processor core in this disclosure may associate with a plural number of local instruction memories. The plural number of local instruction memories may be of same size or different sizes and may be of the same structure or different structures. When one or more than memorizes are used to serve instruction fetching, the other local memory of local instruction memory may perform instruction updating. The mean of instruction updating includes (but not limited to) update instructions through DMA controller.

In the configurable multi-core structure, a plural number of processor cores may work under the same clock frequency or different clock frequency.

The configurable multi-core structure may have the characteristic of load-induced-store (US). When the second processor reads data from an address for the first time, the second processor core reads from the first configurable local memory and stores the data read-out in the second configurable local memory such that any subsequent access is performed on the second configurable local memory. Thus enables same address data transfer between neighboring stage local data memory without additional cost.

The configurable multi-core structure may have pre-transfer characteristic. The processor core may load data from the local data memory associated with a previous stage processor core into the current stage memory. This data is not needed in the current stage processor core but it is needed in the next stage processor core. By writing the data intro the current stage data memory, it enables the next stage processor to access this data. Thus it realizes the same address data transfer between neighboring stage local data memory in relay.

The local data memory may include a singular number of or a plural number of valid flag and a singular number of or a plural number of ownership flag. The valid flag indicates whether the data is valid. The ownership flag may indicate whether the data is used by one of the first and second processor cores. Adopting the valid flag and ownership flag may avoid the use of a ping-pong buffer and improve the memory utilization: further more it enables multiple processor cores accessing the same data memory at same time to speed up data transfer.

In the present disclosure, the transferring value of register through the configurable interconnecting structure includes (but not limited to) a great deal of hard wire for transferring the value of register from previous stage processor core to the register in the current stage processor core and a shift register for transferring the value of register from previous stage processor core to the register in the current stage processor core in sequence.

A register read/write record may be used to determine particular registers whose values need to be transferred. The register read/write record is used to record the read/write status of a register with respect to the local data memory. If the values of the register were already written into the local data memory and the values of the register have not been changed since the last write operation, a current stage processor core can read corresponding data from the data memory of the previous stage to complete the register value transfer, without the need to separately transfer register values to the current stage processor core.

For example, when the register value is written to the appropriate local data memory, a corresponding entry in the register read/write record is set to "0", when the corresponding data is written into the register (e.g., data in the local data memory or execution results), the corresponding entry in the register read/write record to "1." When transferring register values, only values of registers with "1" in the entry in the register read/write record need to be transferred. The data write into the register include (but not limited to) loading data from the associated local data memory to the register and writing the result of the instruction execution into the register.

When the number of processor cores in the configurable multi-core structure is determined, the extension of the head and end of guiding code may be optimized based on the segmented code, thus reduce the number of the needed transferring registers.

For example, generally, a header guiding code is added to the beginning of the code segment to write values of all registers into the registers from memory at a certain address, and an end guiding code is added to the end of the code segment to store values of all registers into memory at a certain address. The values of all registers may then be transferred seamlessly, When the code segment is determined, the code segment may be analyzed to optimize or reduce the instructions in the guiding codes related to the registers.

Within the code segment, if a value of a particular register is not used before a new value is written into the particular register, the instruction storing value of the particular register in the guiding code of the code segment for the previous stage processor core and the instruction loading value of the particular register in the guiding code of the code segment for the current stage processor core can be omitted.

Similarly, if the value of a particular register stored in the local data memory has not been changed duping the entire code segment for the previous stage processor core, the instruction storing value of the particular register in the guiding code of the code segment for the previous stage processor core can be omitted, and the guiding code of the code segment for the current stage processor core may be modified to load the value of the particular register from the local data memory.

In the method and structure of data processing, in the process of code segment execution, all of the processor cores may branch to a same address to execute a section code and when branching to their code segment address after finished the execution of this section code, the same address code may be repeat stored into local instruction memories associated with a plural number of processor cores. The same address code includes (but not limited to) function call and loop.

In the method and structure of data processing, the processor core may access the local instruction memory of the other processor cores; when the processor cores execute the same code and the code length exceed the size of local instruction memory of a singular number of processor core, the code may be stored into local instruction memory correspond to a plural number of processor cores in sequence; during the period of execution, each one of processor cores load the instruction from the local instruction memory which is stored the first section of the same code and execute this code, after this operation has finished then load the instruction from the local instruction memory which stores the second section of this code and execute this code. The rest may be deduced by analogy, all of the same code may be executed by this method.

In the method and structure of data processing, a plural number of processor cores may synchronous execute each code segment in the identical code and also asynchronous execute each code segment in the identical code. A plural number of processor cores may in parallel execute and in serial execute each code segment in the identical code and combination of in parallel and in serial execute each code segment in the identical code.

Each processor core in this disclosure may associate with a plural number of local instruction memories. The plural number of local instruction memories may be of same size or different sizes and may be of the same structure or different structures. When one or more than one memories are used to serve instruction fetching, the other local memory of local instruction memory may perform instruction updating. The mean of instruction updating includes (but not limited to) update instructions through DMA controller.

In a conventional SOC (System on Chip), all of the functional modules except the processor are ASIC modules which are implemented by hard wire connection. The performance requirement to these functional modules is high and it is hard for the conventional processor to meet this requirement. Thus the processor can hardly replace these ASIC modules.

In the configurable multi-core structure, a singular number of or a plural number of processor cores and associated local memories may form a high performance multi-core interconnecting structure, then configuring this structure and loading the corresponding code segment into the local instruction memories, such that particular function may be realized by the multi-core connecting structure and it may replace the ASIC modules in SOC system. The multi-core connecting structure equal to the function modules in SOC, such as image decompresses modules or encrypts and decrypts modules. An of these functional modules may be connected by system buses to implement a SOC system,

In the present disclosure, a local interconnection may also be called a local connection, a data path for connecting two neighboring processor cores and associated local memory. A singular number of processor core and associated local memory or a plural number of processor cores and associated local memory connected by local interconnection may form a multi-core connecting structure which is referred as a functional module of a SOC.

The data transferring path between a multi-core interconnecting structure to another multi-core interconnecting structure which corresponds to a functional module in a SOC forms the system bus of SOC. A plural number of multi-core connecting structures which correspond to the functional modules in a SOC may be connected by the system bus and thus implement a SOC system in general sense.

In the present disclosure, a SOC system may be configurable while the conventional SOC is not. Through the different configuration of the data process structure, different SOCs may be implemented. The configuration may be perform in real time during normal operation, thus the system function may be modified on the fly during operation. The processor core and associated local memories may be dynamically reconfigured and code segment in the associated instruction memory may be dynamically changed, thus changes the system function.

In the present disclosure, the data path for transferring data between internal processor core and associated local memory in the multi-core connecting structure and the other processor cores and associated local memories are called the local interconnection of the functional modules. The data transferred by the local interconnection in functional modules usually need to occupy the operation of processor core which propose the transferring requirement. The system bus may be a local interconnection and a data transfer path to transfer data between different processor cores and their corresponding local memories and it does not need occupy the operation of processor cores. The processor cores and associated local memories may be neighboring or apart from each other.

In the method and structure of data processing, the system bus is formed by using a plural number of connection modules at fixed locations to establish a data path. Any multi-core functional module can be connected to a nearest connection module through a singular number or a plural number of hardwires. The plural number of connection modules are also connected with a singular or plural number of hardwires. The connection modules, the wires between the functional modules and the connection modules, and the wires in between the connection modules form the system bus of SOC.

In the method and structure of data processing, the system bus may also be formed by establishing various data paths such that any processor core and associated local memory can exchange data with any other processor cores and associated local data memory. Such data paths for exchanging data may include exchanging data through shared memory, exchanging data through a DMA controller, and exchanging data through a dedicated bus or network,

For example, the first method is that one or more configurable hardwires may be placed in advance between certain number of processor cores and corresponding local data memory. When two of these processor cores and corresponding local data memory are configured as belong to two different functionl modules, hardwires between the two processor cores and corresponding local data memory may be used as the system bus between the two functional modules.

The second method is that, the certain number of processor cores and corresponding local data memory may be able to visit one another by the DMA controller. Thus, when two of these processor cores and corresponding local data memory are configured as belong to two different functional modules, the DMA path between the two processor cores and corresponding local data memory may be used as the system bus between the two inter connecting multi-core structures during the real time performing.

The third method is that the certain number of processor cores and corresponding local data memory may be configured to use a network-on-chip function. That is, when a processor core and corresponding local data memory needs to exchange data with other processor cores and corresponding local data memory, the destination of the data are determined by the network, therefore establish a data path for data exchange. When two of these processor cores and corresponding local data memory are configured as belong to two different functional modules, the network path between the two processor cores and corresponding local data memory may be used as the system bus between the two functional modules.

The afore mentioned first method uses hard wire to implement system bus thus this data path configuration is static, the second method uses DMA controller to access the processor cores and their corresponding local data memories and the third method uses Network on Chip to access the processor cores and their corresponding local data memories. The last two data path configuration methods are dynamic..

In the method and structure of data processing disclosed, the processor core has fast conditional decision mechanism to decide whether a branch operation is taken or not; the fast conditional decision mechanism may be of a counter to judge loop condition or a finite state machine (FSM) of judging branch action and loop condition.

At the configuration level power management, a particular processor cores may enter a low-power mode based on the configuration information. The particular processor cores include (but are not limited to) the unused processor cores and the processor cores have low work load; the low-power state includes (but not limited to) reducing the processor clock frequency or cutting off the power supply to the processor core.

In the method and structure of data processing, the structure may include a singular number of or a plural number of dedicated processing modules. The dedicated processing modules may be used as a macro block to be called by other modules or processor cores and configurable local memory. The dedicated processing modules may also be independent. They may receive inputs from and/or transmit outputs to other modules or processor cores and configurable local memory. The module or processor core and configurable local memory sending an input to a dedicated processing module may be the same as or different from the module or processor core and configurable local memory receiving the corresponding output from the dedicated processing module. The dedicated processing module may include a fast Fourier transform (FFT) module, an entropy cording module, an entropy decoding module, a matrix multiplication module, a convolution coding module, a Viterbi code decoding module, and a turbo code decoding module, etc.

Using the matrix multiplication module as an example, if a single processor core is used to perform a large-scale matrix multiplication, it may take a large number of clock cycles, limiting the data throughput. On the other hand, if several processor cores are configured to perform the large-scale matrix multiplication, although the number of clock cycles is reduced, the amount of data exchange among the processor cores is increased and a large amount of resources are occupied. However, using the dedicated matrix multiplication module, the large-scale matrix multiplication may be completed in a small number of clock cycles without extra data bandwidth. Further, when segmenting a program including a large-scale matrix multiplication, programs before the matrix multiplication may be segmented to a first group of processor cores, and programs after the matrix multiplication may be segmented to a second group of processor cores. The large-scale matrix multiplication program is segmented to the dedicated matrix multiplication module. Thus, the first group of processor cores inputs data to the dedicated matrix multiplication module, and the dedicated matrix multiplication module performs the large-scale matrix multiplication and sends outputs to the second group of processor cores. Meanwhile, data that does not require matrix multiplication may be directly sent to the second group of processor cores by the first group of processor cores,

### Advantageous effect of invention

The disclosed systems and methods may segment serial programs into code segments to be used by individual processor cores in a senary-connected multi-core structure. In tight of the deferment number of processor cores, the code segments with different sizes and numbers are generated based on different segmented rules and thus may provide scalable multi-core systems.

Further, the disclosed systems and methods may also allocate code segments to individual processor cores, and each processor core executes a particular code segment. The serial-connected processor cores together execute the entire program and the data between the code segments are transferred in dedicated data paths such that data coherence issue may be avoided and a true multi-issue may be realized, In such serial-connected multi-core structures, the number of the multi-issue is equal to the number of the processor cores, which greatly improves the utilization of operation units and achieve significantly high system throughput.

Further, the disclosed systems and methods replace the common cache used by processors with local memory. Each processor core keeps instructions and data in the associated local memory so as to achieve 100% hit rate, solving the bottleneck issue caused by a cache miss and later low speed access to external memory and further improving the system performance. Also, the disclosed systems and methods apply various power management mechanisms at different levels.

Further, the multi-core structure may be performed at three levels, such as rude granularity power management, exiguous granularity power management and real-time hardware power management. The rude granularity power management herein is performed by cutting off the unused cores' power supply. The exiguous granularity power management herein is performed based on the data driver at instruction level. The real-time hardware power management herein is performed by adjusting the clock frequency of processor cores in real time, and under the situation that the processor core is working in normal condition, such that it may decrease the dynamic power consumption when the processor core is working. Thus the adjustment of clock frequency in real time may be realized. That is, high speed and efficient real-time clock frequency adjustment may be achieved.

Further, the disclosed systems and methods may realize an SOC by programming and configuration to significantly shorten the product development cycle from product design to marketing. Further, a hardware product with different functionalities may be made from an existing one by only re-programming and re-configuration.

### Brief description of drawings

Though many extensions of this invention will be made by many forms and substitutions, reference will now be made in detail to exemplary embodiments of the invention, which are illustrated in the accompanying drawings. It is need to be understood, the embodiments are used to explain the invention and not to limit the invention. One skilled in the art will exchange, adjust and improve the specific embodiments; however, these exchangers, adjustments and improvements will be included as part of the invention.
Figure 1 illustrates an exemplary program segmenting and allocating process consistent with the disclosed embodiments;
Figure 2 illustrates an exemplary an exemplary segmenting process consistent with the disclosed embodiments;
Figure 3 illustrates an elementary of configurable multi-core structure on the basis of serial issue and pipeline architecture with the disclosed embodiments;
Figure 4 illustrates an exemplary address mapping to determine code segment addresses consistent with the disclosed embodiments;
Figure 5 illustrates an exemplary data exchange among processor cores consistent with the disclosed embodiments;
Figure 6 illustrates an exemplary configuration of a multi-core structure consistent with the disclosed embodiments;
Figure 7 illustrates an exemplary multi-core self-testing and self-repair system consistent with the disclosed embodiments;
Figure 8(a) illustrates an exemplary register value exchange between processor cores consistent with the disclosed embodiments;
Figure 8(b) illustrates another exemplary register value exchange between processor cores consistent with the disclosed embodiments;
Figure 9 illustrates another exemplary register value exchange between processor cores consistent with the disclosed embodiments;
Figure 10(a) illustrates an exemplary configuration of processor core and local data memory consistent with the disclosed embodiments;
Figure 10(b) illustrates another exemplary configuration of processor core and local data memory consistent with the disclosed embodiments;
Figure 10(c) illustrates another exemplary configuration of processor core and local data memory consistent with the disclosed embodiments,
Figure 11 (a) illustrates a typical structure of a current system-on-chip (SOC) system;
Figure 11 (b) illustrates an exemplary SOC system structure consistent with the disclosed embodiments;
Figure 11(c) illustrates an exemplary SOC system structure consistent with the disclosed embodiments;
Figure 12(a) frustrates an exemplary pre-compiling processing consistent with the disclosed embodiments;
Figure 12(b) illustrates another exemplary pre-compiling processing consistent with the disclosed embodiments;
Figure 13(a) illustrates another exemplary multi-core structure consistent with the disclosed embodiments;
Figure 13(b) illustrates an exemplary all serial configuration of multi-core structure consistent with the disclosed embodiments;
Figure 13(c) illustrates an exemplary serial and parallel configuration of multi-core structure consistent with the disclosed embodiments; and
Figure 13(d) illustrates another exemplary multi-core structure consistent with the disclosed embodiments.

### Description of embodiments

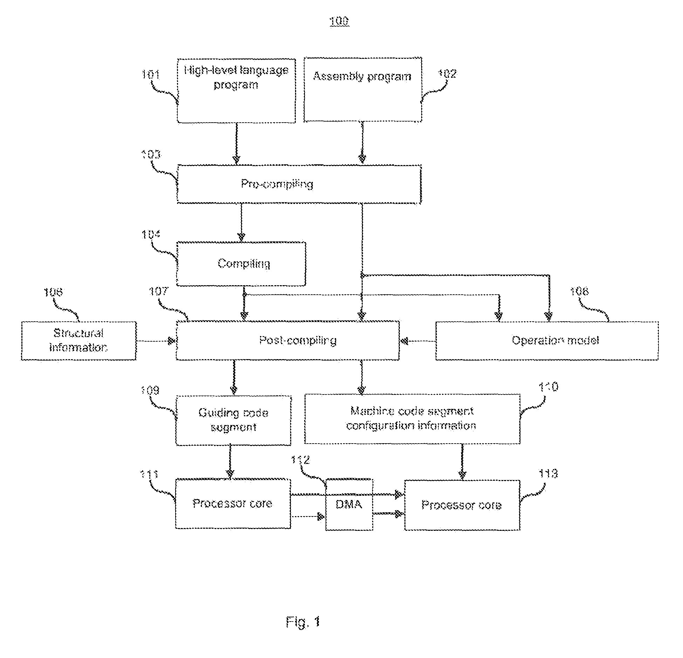

Figure 1 illustrates an exemplary program segmenting and allocating process consistent with the, disclosed embodiments. During pre-compiling processing (103), a "call" may be expanded to generate expanded call computer program, which may include a high-level language program (101) and/or an assembly language programs(102). After the pre-compiling processing, any expanded high-level language and/or assembly code of the computer program may be compiled during compiling (104) to generate assembly code in executing sequences. The compiled code may be further processed in post-compiling (107). If a program only includes assembly code and the assembly code already in executing sequences, the compiling process (104) may be skipped. The assembly code may be processed in post-compiling (107) directly. During post-compiling (107), will certain embodiment, based on the structural information (106), the assembly code may be run on operation model of processor core, and code segments may be segmented, Therefore, the executable code segments and configuration information (110) are generated and guiding code segments (109) may also be generated corresponding to the executable code segments. At last, a plural number of corresponding processor cores (113) may be configured by one processor core (111) in the structure or through DMA controller in the structure.

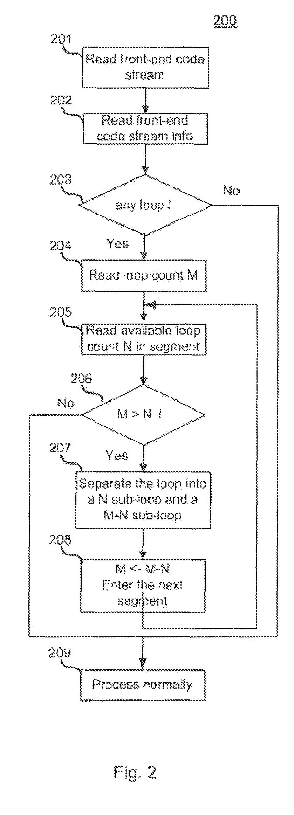

As shown in figure 2, the instruction code divider reads in a front-end code stream to be segmented (201), then read in configuration information about the front-end code stream (202), Further, the instruction code divider may read in certain length of the code stream at one time and may determines whether there is any loop within the code read-in (203). If the instruction code divider determines that there is no loop within the code, the instruction code divider may process the code segmentation normally on the read-in code (209), On the other hand, if the instruction code divider determines that there is a loop within the code, the instruction code divider may further read loop count M (204). Further, the instruction code divider may read in the available loop count N for the particular or current segment (205). After obtaining the available loop count N (205), the instruction code divider may determine whether M is greater than N (206). If the instruction code divider determines that M is not greater than N (206, No), the instruction code divider may process the code segment normally (209). On the other hand, if the instruction code divider determines that M is greater than N (206, Yes), the instruction code divider may separate the loop into two sub-bops (207), One sub-loop has a loop count of N, and the other sub-bop has a loop count of M-N, Further, the original M is set as M-N (i.e., the other sub-loop) for the next code segment (208) and return to further determine whether M-N is within the available loop count of the next code segment. This process repeats until all loop counts are less than the available loop count N of the code segment. This effectively solves the loop count greater than available count of a program segment.

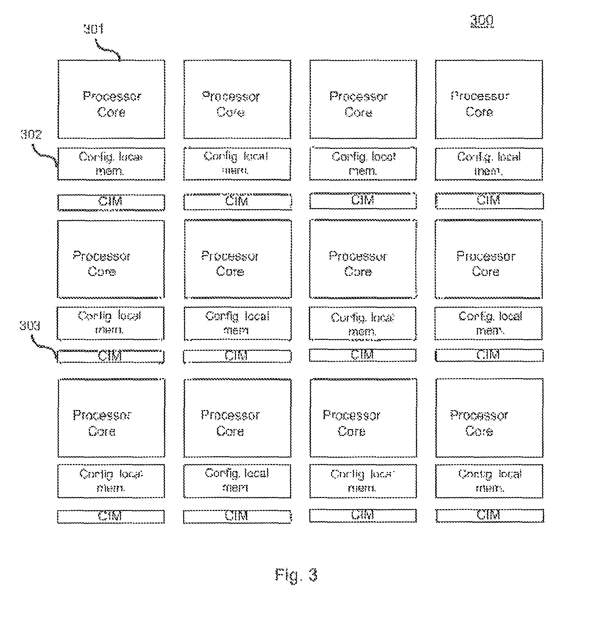

Figure 3 illustrates an elementary of configurable multi-core structure on the basis of serial issue and pipeline architecture. In certain embodiment, this structure may include a plural number of processor cores (301), a Plural number of configurable local memory (302) and a plural number of configurable interconnecting modules (CIM, 303). In the embodiment, each processor core (301) may correspond to a configurable local memory (302) which is directly below the processor core to form a single stage of a pipelined operation. By configuring the configurable interconnecting modules (303), a plural number of processor cores (301) and their corresponding configurable local, memory (302) may be configured in a serial connection to form a serial multi-core configuration. Multiple serial connection structure may be independent with each other, and may be in part or in all relate to each other executing programs in serial, in parallel or in a mixed serial and parallel manner.

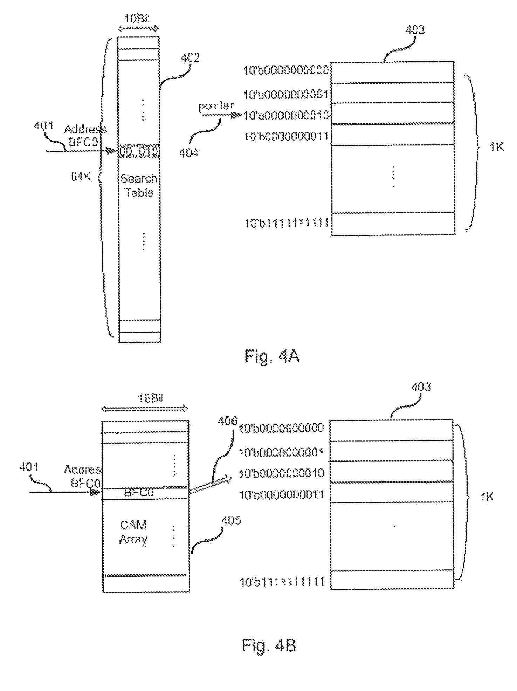

Figure 4 illustrates an elementary of address mapping to determine code segment addresses. In figure 4(a), a lookup table is used to achieve address lookup. To 16-bint addressing for an example, a 64K address space is divided into multiple 1K address spaces of small memory blocks (403), and the memory blocks are written in a sequential order. After a write operation on one memory block is completed, the valid bit of the memory block is set to '1', and the address pointer (404) of memory (403) automatically points to a next available memory block whose valid bit is '0'. When write a data into one entry and write its address into lookup table (402). Using a write address BFCO as an example, when the address pointer (404) points to the No. 2 block of memory (403), data is written into the No. 2 block, and the No. 2 is also written into an entry of lockup table (402) corresponding to the address of BFCO. A mapping relationship is therefore established between the No. 2 memory block and the lookup table entry, When reading the data, the lockup table entry may be found based on the address, and the data in the corresponding memory block may then be read out. In figure 4(b), a content addressable memory (CAM) array may be used to achieve the address lockup. Using 16-bit addressing as an example, a 64K address space is divided into multiple 1K address spaces of small memory blocks (403). The multiple small memory blocks (403) may be written in a sequential order. After write to one memory block is completed, the valid bit of the memory block is set tao '1', and the pointer of memory blocks (403) automatically points to a next available memory block whose valid bit is '0'. The associated address is also written into a next table entry of the CAM array (402). Using a write address BFCO as an example, when the address pointer (406) points to the No. 2 block of memory (403), data is written into the No. 2 block, and the address BFCO is also written into the next entry of CAM array (405) to establish a mapping relationship. When reading the data, the CAM array is matched with the instruction address to find the table entry, and the data in the corresponding memory block may then be read out.

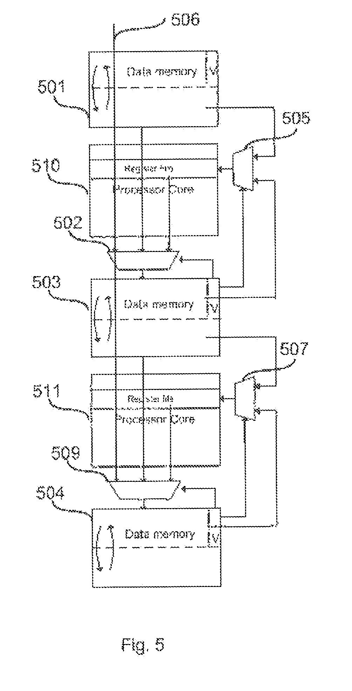

Figure 5 illustrates an exemplary data exchange among processor cores. All data memories are located between processor cores, and each memory is logically divided into an upper part and a lower part. Wherein, the upper part is used by a processor core above the data memory to read and write data from and to the data memory; while the lower part is used by a processor core below the data memory only to read data which is used by lower processor core from the data memory. At the same time a processor core is executing the program, data from data memory are relayed from one data memory down to another data memory. The 3-to-1 selectors (502, 509) may select external or remote data (506) into data memory (503, 504). When processor cores (510 and 511) do not execute a 'store' instruction, lower parts of data memory (501 and 503) may respectively write data into upper parts of data memory (503 and 504) through 3-to-1 selectors (502 and 509). At the same time, a valid bit V of the written row of the data memory is also set to '1'. When a processor core is executing the 'store' instruction, the corresponding register file only writes data into the data memory below the processor core. When a processor core is executing a 'load' instruction, 2-to-1 selector (505, 507) may be controlled by the valid bit V of data memory (503, 504) to choose data from data memory (501, 503) or from data memory (503, 504) respectively, If the valid bit V of the data memory (503, 504) is '1', indicating the data is updated from the above data memory (501, 503), and when the external data (506) is not selected, 3-to-1 selector (502, 509) may select output of the register file from processor core (510, 511) as input, to ensure stored data is the latest data processed by processor core (510, 511), When the upper part of data memory (503) is written with data, data in the lower part of data memory (503) may be transferred to the upper part of the data memory (504). During data transfer, a pointer is used to indicate the entry or row being transferred into. When the pointer points to the last entry, the transfer is about completed. When the execution of a portion of program has finished, the data transfer from one data memory to a next data memory should have completed. Then, during the execution of a next portion of program, data is transferred from the upper part of the data memory (501) to the lower part of the data memory (503), and from the upper part of the data memory (503) to the lower part of the data memory (504), Data from the upper part of the data memory (504) may also be transferred downward to form a ping~pong transfer structure. The data memory may also be divided to have a portion being used to store instructions. That is, data memory and instruction memory may be physical inseparable.

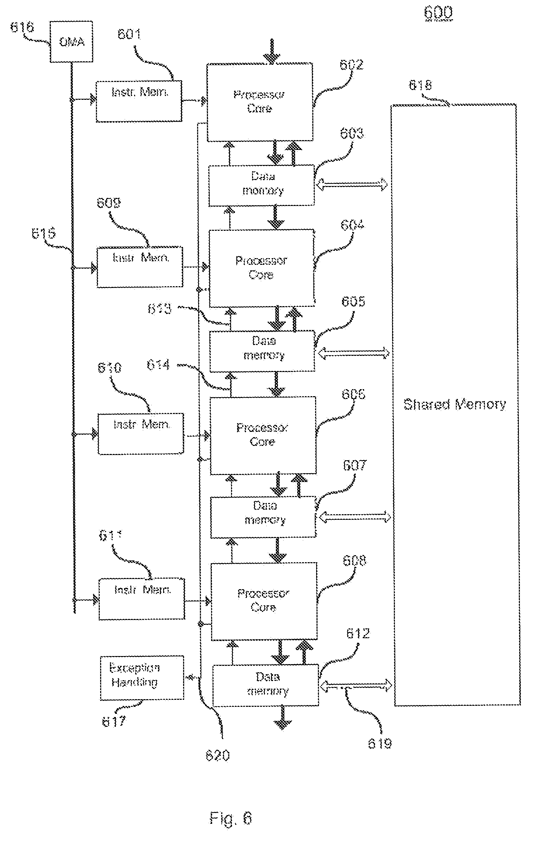

Figure 6 illustrates an exemplary block diagram of the connection between back pressure, exception handling as well as data memory and shared memory. In the embodiment, a DMA controller (616) is coupled to the instruction memory (601, 609, 610, and 611) to write corresponding code segments (615) into the instruction memory (601, 609, 610, and 611) to be executed by processor cores (602, 604, 606, and 608) respectively, and these memories are coupled to data memory (603, 605, 607, and 612) for read and write operations. To take processor core (604), data memory (605) and the next stage processor core (606) for example, where the processor core (604) may be referred to as a previous stage of the macro pipeline and the processor core (606) may be referred to as a current stage. Both processor core (604) and the processor core (606) may read and write from and to the data memory (605), which is coupled between the processor core (604) and the processor core (606). Only after the processor core (604) completed writing data into data memory (605) and the processor core (606) completed reading data from the data memory (605), the upper part and the lower part of data memory (605) may perform the ping-pong data exchange. Back pressure signal (614) is used by a processor core (606) to inform the data memory (605) at the previous stage whether the processor core (606) has completed read operation. Back pressure signal (613) is used by a data memory (605) to notify the process core (604) at the previous stage whether there is an overflow, and to pass the back pressure signal (614) from a processor core (606) at a current stage. The processor core at the previous stage (e.g., processor core 604), according to its operation condition and the back pressure signal from the corresponding data memory (605), may determine whether the macro pipeline is blocked or stalled and whether to perform a ping-pong data exchange with respect to the corresponding data memory (605) and may further generate a back pressure signal and pass the back pressure signal to its previous stage. Thus, by passing the back pressure signals from one processor core to the data memory and then to another processor core in a reverse direction, the operation of the macro pipeline may be controlled. All the data memories (603, 605, 607, and 612) coupled to the shared memory (618) through the connections (619). When a read address or a write address used to access a data memory is out of the address range of the data memory, an addressing exception occurs and the shared memory (618) is accessed to find the address and its corresponding memory and the data may then be written into that address or read from that address. When the processor core (608) needs to access the data memory (605), an exception also occurs, and the data memory (605) passes the data to the processor core (608) through shared memory (618). The exception information from both the data memory and the processor cores are transferred to an exception handling module (617) through a dedicated channel (620). In the embodiment, to take the execution result in processor core is overflow for example, exception handing module (617) may control the processor core to perform a saturation operation on the overflow result; If there is an overflow in a data memory, exception handling module may control the data memory to access shared memory to store the overflowed data in the shared memory. During the exception handling, exception handling module (617) may signal the involving processor core or data memory to block operation of the involving processor core or data memory, and to restore operation after the completion of exception handling. Other processor cores and data memory may determine whether to block operation based on the back pressure signal received.

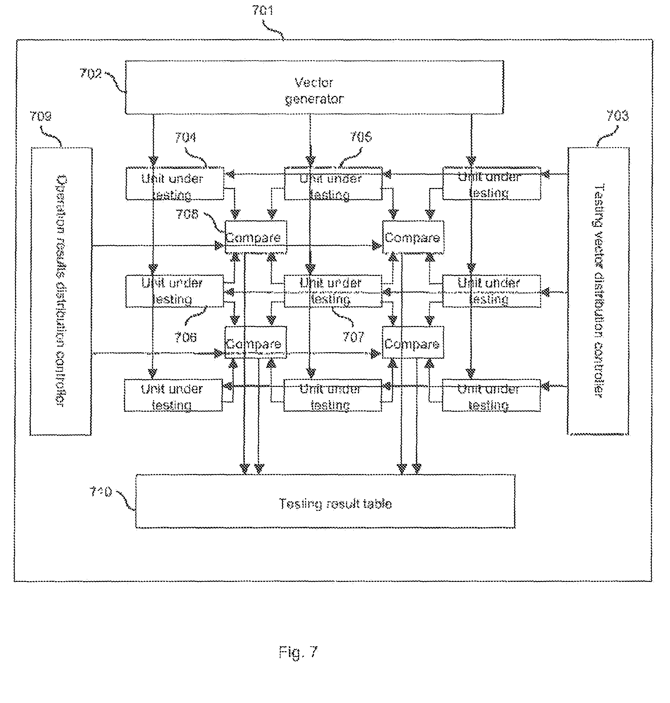

Figure 7 illustrates an exemplary multi-core self-testing and self-repair system. In the multi-core self-testing and self-repair system (701), vector generator (702) may generate testing vectors to be used for the plural number of units (processor cores) and also transfer the testing vectors to each processor core in synchronization. Testing vector distribution controller (703) may control the connections among the processor cores and the vector generator (702), and operation results distribution controller (709) controls the connection among the processor cores and the compare logic. A processor core may compare its own results with results of other processor cores through the compare logic. In certain embodiment, each processor core may compare results with neighboring processor cores. For example, processor core (704) may compare results with processor cores (705, 706, and 707) through compare logic (708). The compare logic may include one or more comparators. If the compare logic includes one comparator, each processor core in turn compares results with neighboring processor cores. If the compare logic includes multiple comparators, a processor core may compare results with other processor cores at the same time. The testing results may be directly written into testing result table (710) by compare logic.

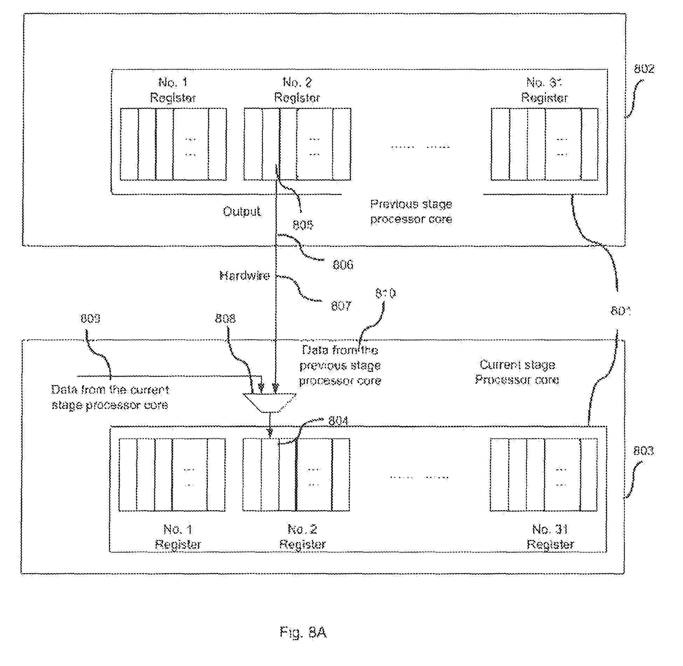

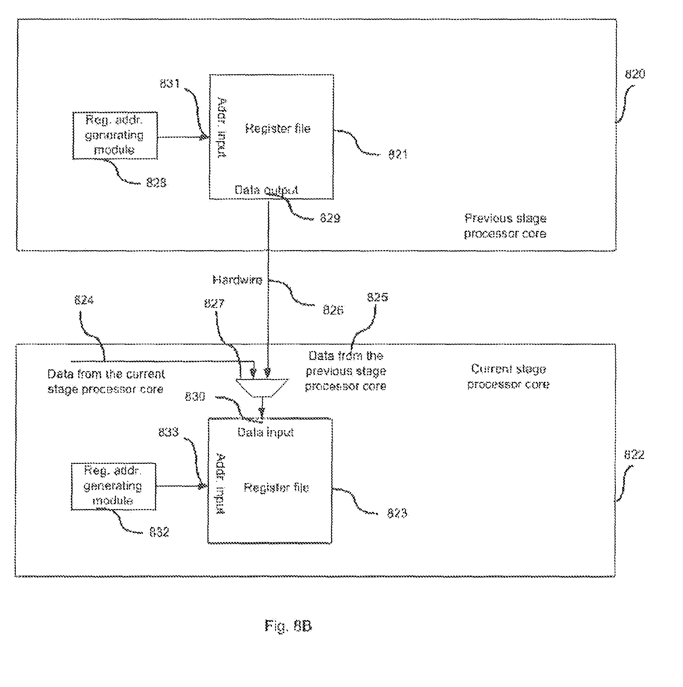

Figure 8 illustrates three embodiments of register data transferred among the adjacent processor cores.

As is shown in Figure 8(a), each processor core contains a register file (801) having thirty-one (31) 32-bit general purpose registers, values of register file of previous stage processor core (802) may be transferred to register file of current stage processor core (803) through hardwire, which may include 992 linens, each line representing a single bit of registers of register file. More particularly, each bit of registers of previous stage processor core (802) corresponds to a bit of registers of current stage processor core (803) through a multiplexer (808). When transferring the register values, values of the entire 31 32-bit registers may be transferred from the previous stage processor core (802) to the current stage processor core (803) in one cycle. Figure 8(a) illustrates a hard wire connection of single bit (804) in a general purpose register, and other bits may be connected similarly. A single bit (804) of register of current stage processor core (803) is hardwired to output (806) of the corresponding single bit (805) in the register of previous stage processor core (802) through multiplexer (808). When the current stage processor core performs arithmetic, logic, and other operations, the multiplexer (808) selects data from the current stage processor core (809); when the current processor core (803) performs a loading operation, if the data exists in the local memory associated with the current stage processor core (803), the multiplexer (808) selects data from the current stage processor core (809), otherwise the multiplexer (808) selects data from the previous stage processor core (810). Further, when transferring register values, the multiplexer (808) selects data from the previous stage processor core (810) and all 992 bits of the register file may be transferred in a single cycle.

In the embodiment disclosed in figure 8(b), adjacent processor cores (820, 822) are coupled together as two stages of the macro pipeline. Each processor core contains a register file having thirty-one (31) 32-bit general purpose registers. When transferring register values from previous stage processor core (820) to current stage processor core (822), hardwire may be used to transfer values of register file 821 to register file (823). The hardwire (826) may only include 32 lines to connect output (829) of register file (821) to input (830) of register file (823) through multiplexer (827). Inputs to the multiplexer (827) are data from the current stage processor core (824) and data from the previous stage processor core (825) through hard wire (826). When the current stage processor core (822) performs arithmetic, logic, and other operations, the multiplexer (827) selects data from the current stage processor core (824); when the current processor core (822) performs a loading operation, if the data exists in the local memory associated with the current stage processor core (822), the multiplexer (827) selects data from the current stage processor core (824), otherwise the multiplexer (827) selects data from the previous stage processor core (825). Further, when transferring register values, the multiplexers (827) selects data from the previous stage processor core (825). The register address generating module (828, 832) which correspond to register file (821, 823) generate register address for register value transfer and provides the register address to address input (831, 833) of register file (821, 823). Values of 32 bits of a single register may be transferred from register file (821) to register file (823) in multiple steps, through hardwire (826) and multiplexer (827). Therefore, values of all registers in the register file may be transferred in multiple cycles using a substantially small number of lines in hardwire.

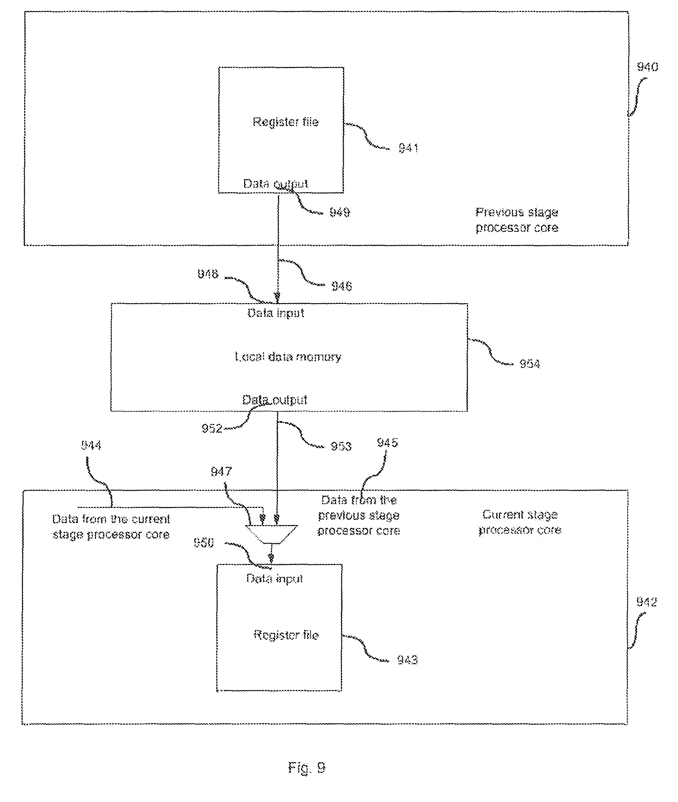

In the embodiment disclosed in figure 9, adjacent processor cores (940, 942) are coupled together as two stages of the macro pipeline. Each processor core contains a register file having a plural number of 32-bit general purpose registers. When transferring register values from previous stage processor core (940) to current stage processor core (942), previous stage processor core (940) may user a 'store' instruction to write the value of a register from register file (941) in a corresponding local data memory (954). The current stage processor core (942) may then use a 'load' instruction to read the register value from the local data memory (954) and write the register value to a corresponding register in register file (943). In the embodiment, data output (949) of register file (941) in previous stage processor core (940) may be coupled to data input (948) of the local data memory (954) through a 32-bit connection (946), and data input (950) of register file (943) current stage processor core (942) may be coupled to data output (952) of data memory (954) through a 32-bit connection (953) and the multiplexer (947). Inputs to the multiplexer (947) are data from the current stage processor core (944) and data which transferred through 32-bit hardwire from the previous stage processor core (945). When the current stage processor core (942) performs arithmetic, logic, and other operations, the multiplexer 947 selects data from the current stage processor core (944); when the current processor core (942) performs a loading operation, if the data exists in the local memory associated with the current stage processor core (942), the multiplexer (947) selects data from the current stage processor core (944), otherwise the multiplexer (947) selects data from the previous stage processor core (945). Further, when transferring register values, the multiplexer (947) selects data from the previous stage processor core (945). In the embodiment disclosed in Figure 8(c), previous stage processor core may write the values of all registers of register file (941) in the local data memory (954), and current stage processor core may then read the values and write the values to the registers in register file (943) in sequence. Previous stage processor core may also write the values of some registers but not all of register file (941) in the local data memory (954), and current stage processor core may then read the values and write the values to the corresponding registers in register file (943) in sequence. Alternatively, previous stage processor core may write the value of a single register of register file (941) in the local data memory (954), and current stage processor core may then read the value and write the value to a corresponding register in register file (943), and the process is repeated until values of all registers in the register file (941) are transferred.

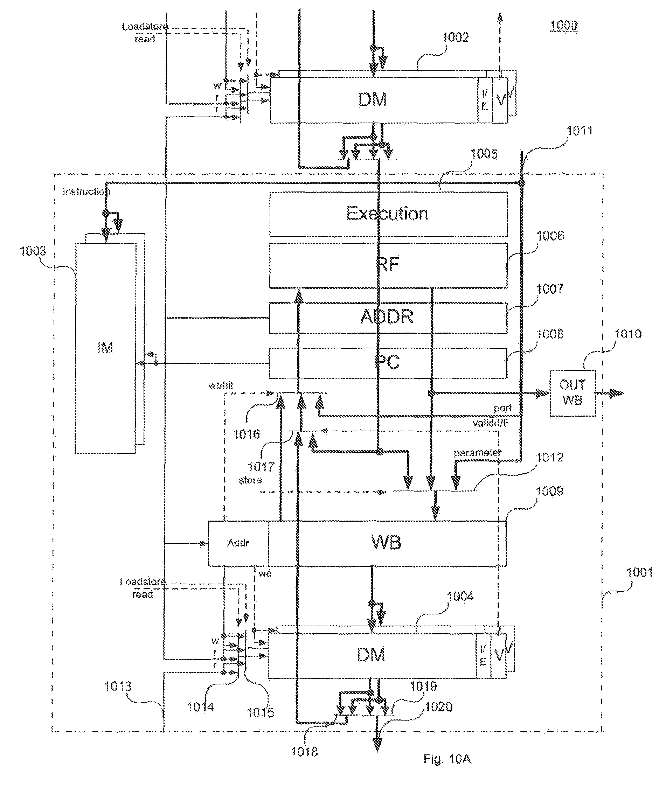

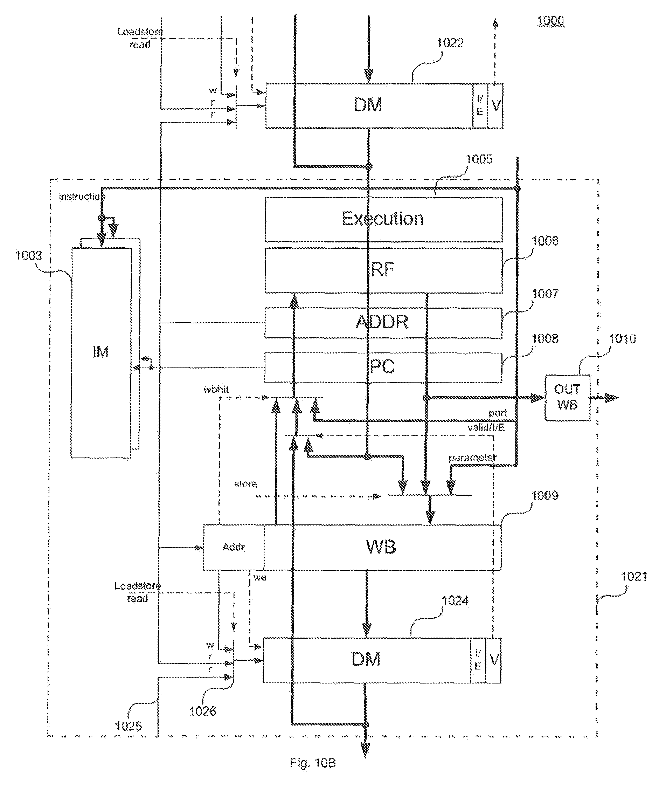

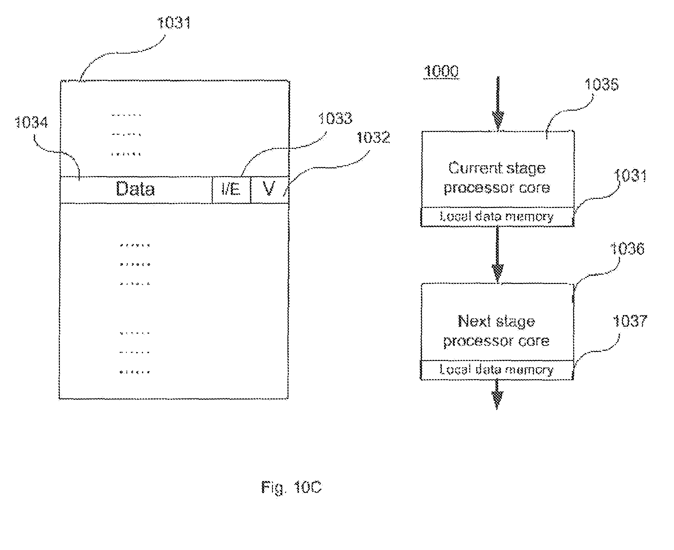

Figure 10 illustrates an exemplary configuration of processor core and local data memory consistent with the disclosed embodiments. One skilled in the art will exchange, adjust and improve the specie embodiments; however, these exchanges, adjustments and improvements will be included as part of the invention.

In the embodiment disclosed in figure 10(a), multi-core structure includes a processor core (1001) having local instruction memory and local data memory, and local data memory 1002 associated with a previous stage processor core. Processor core (1001) includes local instruction memory (1003), local data memory (1004), an execution unit (1005), a register file (1006), a data address generation module (1007), a program counter (PC) (1008), a write buffer (1009), and an output buffer (1010).

Local instruction memory (1003) may store instructions for the processor core (1001). Operands needed by the execution unit (1005) of processor core (1001) are from the register file (1006) or from immediate in the instructions. Results of operations are written back to the register file (1006).

In the embodiment, local data memory may include two sub-modules. To take local data memory (1004) for example, Data read from the two sub-modules are selected by multiplexers (1018, 1019) to produce a final data output (1020).

Processor core may use a 'load' instruction to load register file (1006) with data in the local data memory (1002, 1004), data in write buffer (1009), or external data (1011) from shared memory. In the embodiment, data in the local data memory (1002) and (1004), data in write buffer (1009), and external data (1011) are selected by multiplexers (1016, 1017) into the register file (1006).

Processor core may use a 'store' instruction to write data in the register file (1006) into local data memory (1004) through the write buffer (1009), or to write data in the register file (1006) into external shared memory through the output buffer (1010). Such write operation may be a delay write operation. Further, when data is loaded from local data memory (1002) into the register file (1006), the data from local data memory 1002 may also be written into local data memory (1004) through the write buffer (1009) to achieve so-called load-induced-store (LIS) capability and to realize no-cost data transfer.

In the embodiment disclosed in figure 10(a), write buffer (1009) may receive data from three sources: data from the register file (1006), data from local data memory (1002) of the previous stage processor core, and data (1011) from external shared memory. Data from the register file (1006), data from local data memory (1002) of the previous stage processor core, and data (1011) from external shared memory are selected by multiplexer (1012) into the write buffer (1009).

In the embodiment disclosed in figure 10(a), local data memory may only accept data from a write buffer within the same processor core. For example, in processor core (1001), local data memory (1004) may only accept data from the write buffer (1009).

In the embodiment disclosed in figure 10(a), the local instruction memory (1003) and the local data memory (1002, 1004) each includes two identical memory sub-modules, which may be written or read separately at the same time. Such structure may be used to implement so-called ping-pong exchange within the local memory. Addresses to access local instruction memory (1003) are generated by the program counter (PC) (1008). Addresses to access local data memory (1004) may be from three sources: addresses from the write buffer (1009) in the same processor core (e.g., in an address storage section of write buffer storing address data), addresses generated by data address generation module (1007) in the same processor core, and addresses (1013) generated by a data address generation module in a next stage processor core. The addresses from the write buffer (1009) in the same processor core, the addresses generated by data address generation module (1007) in the same processor core, and the addresses (1013) generated by the data address generation module in the next stage processor core are further selected by multiplexer (1014, 1015) into address ports of the two sub-modules of local data memory (1004) respectively.

Similarly, addresses to access the local data memory (1002) may also be from three sources: addresses from an address storage section of a write buffer in the same processor core, addresses generated by a data address generation module in the same processor core, and addresses generated by the data address generation module (1007) in the next stage processor core. These addresses are selected by two multiplexers into address ports of the two sub-modules of local data memory 1002 respectively.

Figure 10(b) illustrates another exemplary block diagram of the composing of processor cores and their corresponding local memories consistent with the disclosed embodiments. Wherein, multi-core structure includes a processor core (1021) having local instruction memory and local data memory, and local data memory (1022) associated with a previous stage processor core. Similar to processor core (1001) in Figure 10(a), processor core (1021) includes local instruction memory (1003), local data memory (1024), execution unit (1005), register file (1006), data address generation module (1007), program counter (PC) (1008), write buffer (1009), and output buffer (1010).

The multi-core structure proposed by the embodiment corresponds to figure 10(b) is approximating same as the multi-core structure proposed by embodiment correspond to figure 10(a), However, different from Figure 10(a), local data memory (1022, 1024) includes a single dual-port memory module instead of two sub-modules. The dual-port memory module may support read and write operations using two different addresses.

Addresses to access local data memory (1024) may be from three sources: addresses from the address storage section of the write buffer (1009) in the same processor core, addresses generated by data address veneration module (1007) in the same processor core, and addresses (1025) generated by a data address generation module in a next stage processor core. The addresses from the write buffer (1009) in the same processor core, the addresses generated by data address generation module (1007) in the same processor core, and the addresses (1025) generated by the data address generation module in the next stage processor core are further selected by a multiplexer (1026) into an address port of the local data memory (1024).

Similarly, addresses to access local data memory (1022) may also be from three sources: addresses from an address storage section of a write buffer in the same processor core, addresses generated by a data address generation module in the same processor core, and addresses generated by data address generation module (1007) in a next stage processor core. These addresses are selected by a multiplexer into an address port of the local data memory (1022).

Alternatively, because 'load' instructions and 'store' instructions generally count less than forty percent of a computer program, a single-port memory module may be used to replace the dual-port memory module in the embodiment correspond to figure 10(b). Wen a single-port memory module is used, the sequence of instructions in the computer program may be statically adjusted during compiling or may be dynamically adjusted during program execution such that instructions requiring access to the memory module may be executed at the same time when executing instructions not requiring access to the memory module. Thus the composing of connection structure may be more terseness and efficiency.

In the embodiment disclosed in figure 10(b), every local data memory is a dual-port memory module that is capable of simultaneously supporting two read operations, two write operations, or one read operation and one write operation.

In order to ensure the data will not be miswritten in execution, it may adopt the method proposed in the embodiment disclosed in figure 10(c). In local data memory (1031), every address entry may have a corresponding valid bit (1032) and a corresponding ownership bit (1033).

In figure 10(c), valid bit (1032) may indicate the validity of the data (1034) in the local data memory (1031). For example, a '1' may be used to indicate the corresponding data (1034) in local data memory (1031)is valid, and a '0' may be used to indicate the corresponding data (1034) in local data memory (1031) is invalid. Ownership bit (1033) may indicate which processor core is using the corresponding data (1034) in local data memory (1031). For example, a '0' may be used to indicate that the data (1034) is used by current stage processor core (1035) corresponding to the local data memory (1031) and a '1' may be used to indicate that the data (1034) is used by both the current stage processor core (1035) corresponding to the local data memory (1031) and a next stage processor core (1036).

In the embodiment, the valid bit (1032) and the ownership bit (1033) may be set according to the above definitions to ensure accurate read/write operations on local data memory (1031).

In the embodiment disclosed in figure 10(c), if the valid bit (1032) of an entry in the local data memory (1031) is '0', the corresponding data (1034) is invalid, That is, if needed, new data may be directly stored in this entry. If the valid bit (1032) is 1' and the ownership bit (1033) is '0', the corresponding data (1034) is valid and used by the current stage processor core (1035) corresponding to the local data memory (1031), and current stage processor core (1035) may directly store new data in this entry. If the valid bit (1032) is '1' and the ownership bit (1033) is '1', the corresponding data (1034) is valid and used by both current stage processor core (1035) and the next stage processor core (1036), and current stage processor core (1035) has to wait until the ownership bit (1033) changes back to '0' and then may store new data in this entry, Current stage processor core (1035) or local data memory (1031) may first transfer data (1034) to a corresponding location in the local data memory (1037) associated with the next stage processor core (1036), and then change the ownership bit (1033) of the data (1034) to '0' such that current stage processor core (1035) may directly store new data in this entry.

In the embodiment disclosed in figure 10(c), when storing data into local data memory (1031), current stage processor core (1035) may set the valid bit (1032) to '1' and may set the ownership bit (1033) based on whether the data (1034) may be used by next stage processor core (1036). If the data (1034) may be used by next stage processor core (1036), the ownership bit (1033) may be set to '1', otherwise may be set to '0'. Or current stage processor core (1035) may set the ownership bit (1033) to '1' whenever setting the valid bit (1032) to '1'. Although this may increase the capacity requirement of the local data memory (1031), the implementation structure may be simplified.

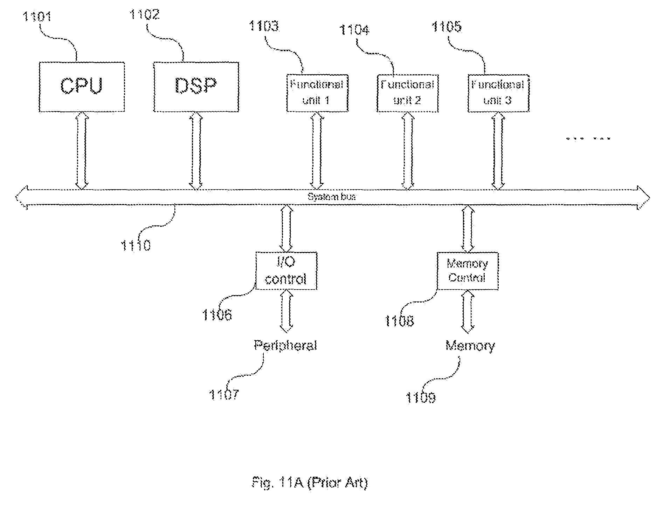

Figure 11(a) shows a typical structure of a current SOC system. As shown in Figure 11 (a), central processing unit (CPU) (1101), digital signal processor (DSP) (1102), functional units (1103, 1104, and 1105), input/output control module (1106), and memory control module (1108) are all connected to system bus (1110). The SOC system may exchange data with peripheral (1107) through input/output control module (1106), and access external memory (1109) through memory control module (1108).

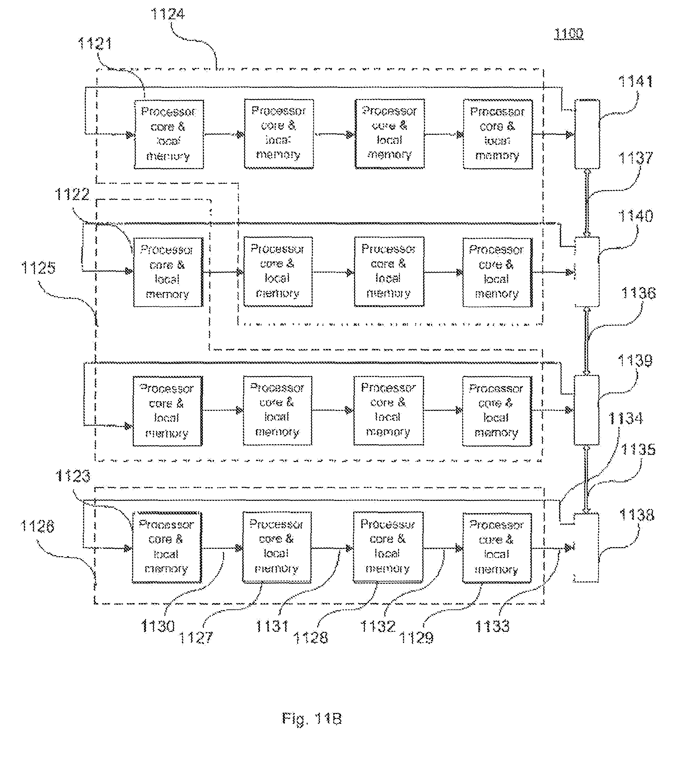

Figure 11(b) illustrates an exemplary SOC system structure consistent with the disclosed embodiments. In the embodiment, processor core and associated local memory (1121) and other six processor cores and the corresponding local memory may constitute functional module (1124), processor core and corresponding local memory (1122) and other four processor cores and the corresponding local memory may constitute functional module (1125), and processor core and corresponding local memory (1123) and other three processor cores and the corresponding local memory may constitute functional module (1126). Functional modules (1124, 1125, and 1126) may refer to any module capable of performing a defined set of functionalities and may correspond to any of CPU (1101), DSP (1102), functional unit (1103, 1104 or 1105), input/output control module (1106), and memory control module (1108), as described in Figure 11(a).

To take the functional module (1126) for example, processor core and associated local memory (1123), processor core and associated local memory (1127), processor core and associated local memory (1128), and processor core and associated local memory (1129) constitute a serial-connected multi-core structure to carry out functionalities of function module (1126).

Processor core and associated local memory (1123) and processor core and associated local memory (1127) may be coupled through an internal connection (1130) to exchange data. Similarly, processor core and associated local memory (1127) and processor core and associated local memory (1128) are coupled through an internal connection (1131) to exchange data, and processor core and associated local memory (1128) and processor core and the associated local memory (1129) are coupled through an internal connection (1132) to exchange data.

Functional module (1126) may be connected to bus connection module (1138) through hardwire (1133, 1134) such that functional module (1126) and the bus connection module (1138) may exchange data. Similarly, functional module (1125) and bus connection module (1139) may exchange data, and functional module (1124) and bus connection modules (1140, 1141) may exchange data. Bus connection module (1138) and bus connection module (1139) are coupled through hardwire (1135) for data exchange. Bus connection module (1139) and bus connection module (1140) are coupled through hardwire (1136) for data exchange, Bus connection module (1140) and bus connection module (1141) are coupled through hardwire (1137) for data exchange. Thus, functional module (1125), functional module (1126), and functional module (1127) may exchange data between each other. That is, the bus connection modules (1138, 1139, 1140, and 1141) and hardwires (1135, 1136, and 1137) perform functions of a system bus.

Due to the number of the processor and its local memory in the configurable multi-core structure is easy to extend, the multi-core structure in SOC system structure may be scaled to include any appropriate number of processor cores and associated local memory to implement various SOC systems. Further, the functional modules may be re-configured dynamically to change the configuration of the multi-core structure with desired flexibility.

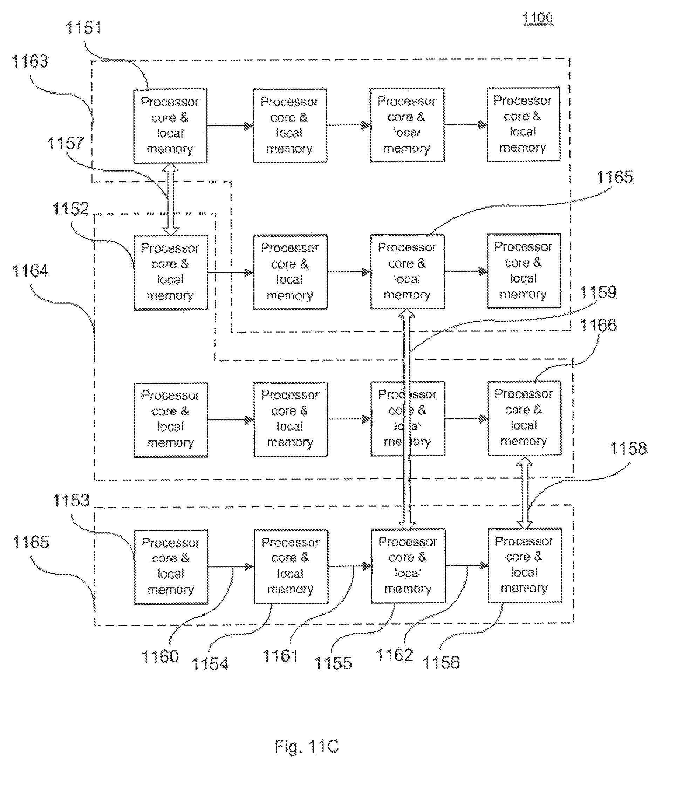

Figure 11(c) illustrates another exemplary block diagram of SOC system on the basis of this invention. In certain embodiment, the processor core and its corresponding local memory (1151) as well as the other six processor cores and their corresponding local memories are getting together to constitute the functional unit (1163). The processor core and its corresponding local memory (1152) as well as the other four processor cores and their corresponding local memories are getting together to constitute the functional unit (1164). The processor core and its corresponding local memory (1153) as well as the other two processor cores and their corresponding local memories are getting together to constitute the functional unit (1165). Each of functional modules (1163, 1164, and 1165) may correspond to any of CPU (1101), DSP (1102), functional unit (1103, 1104 or 1105), input/output control module (1106), and memory control module (1108), as described in Figure 11 (a).

To take the functional module (1165) for example, the processor core and its corresponding local memory (1153, 1154, 1155, and 1156) constitute a serial-connected multi-core structure to carry out functionalities of function module (1165).

Further, processor core and associated local memory (1153) and processor core and associated local memory (1154) may be coupled through an internal connection (1160) to exchange data. Similarly, processor core and associated local memory (1154) and processor core and associated local memory (1155) are coupled through an internal connection (1161) to exchange data, and processor core and associated local memory (1155) and processor core and the associated local memory (1156) are coupled through an internal connection (1162) to exchange data.

In certain embodiment for example, data exchange between functional module (1165) and functional module (1164) is realized by data exchange between pocessor core and associated local memory (1156) and processor core and associated local memory (1166). According to the disclosure of the invention, during operation, when processor core and associated local memory (1156) need to exchange data with processor core and associated local memory (1166), a configurable interconnection network may be automatically configured to establish a bi-directional data path (1158) between processor core and associated local memory (1156) and processor core and associated local memory (1166), based on the requirement of data transfer. Similarly, if processor core and associated local memory (1156) needs to transfer data to processor core and associated local memory (1166) in a single direction, or if processor core and associated local memory (1166) needs to transfer data to processor core and associated local memory (1156) in a single direction, a single-directional data path may be established accordingly.

In addition, in the embodiment, bi-directional data path (1157) may be established between processor core and associated local memory (1151) and processor core and associated local memory (1152), and bi-directional data path (1159) may be established between processor core and associated local memory (1165) and processor core and associated local memory (1155). Thus, using this method, functional module (1163), functional module (1164), and functional module (1165) may exchange data between each other, and bi-directional data paths (1157, 1158, and 1159) perform functions of a system bus as in Figure 11 (a), and these bi-directional data paths and functional module (1163, 1164, and 1165) are used to constitute a typical SOC structure.

According to the different requirement of SOC application, more than one data paths may be configured between any two functional modules. Due to the number of the processor and its local memory in the configurable multi-core structure is easy to extend, it is easy to implement various SOC systems based on the disclosed multi-core structure. Further, the functional modules may be re-configured dynamically to change the configuration of the multi-core structure with desired flexibility when running.

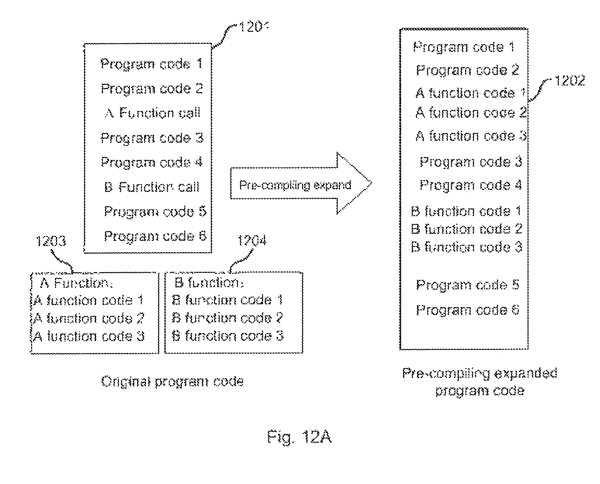

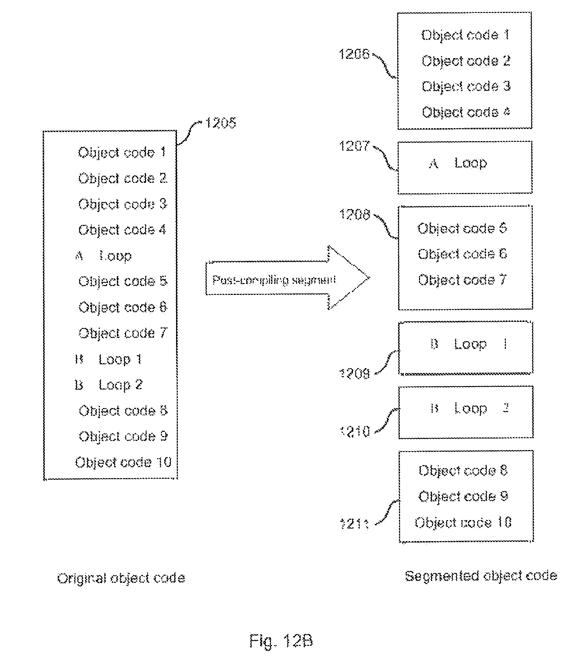

Figure 12 is an embodiment of pre-compiling and post-compiling, wherein figure 12(a) illustrates an exemplary pre-compiling processing with the disclosed embodiments and figure 12(b) illustrates an exemplary post-compiling processing with the disclosed embodiments.

As shown in figure 12(a), the left side is the original program code (1201, 1203, and 1024), and in the program code there are two function calls, function call A, function call B. In the program codes, program code (1023) and program code (1024) are the source code of function call A and function call B, respectively. After pre-compiling, the function call A and function call B are replaced with the corresponding program codes of the function calls respectively, so that the expanded codes have no functional call, (1202).

Figure 12(b) illustrates an exemplary post-compiling processing. As shown in figure 12(b), the original object code (1205) may be an object code normally compiled to be executed in sequence. After post-compiling, the original object code is segmented into a plural number of code segments (1206, 1207, 1208, 1209, 1210, and 1211), each being allocated to a processor core for executing. The loop body A may be divided into a single code segment (1207). The loop body B may be divided into two small code segments because it is relative large. The code segment (1209) includes loop body B1 and code segment (1210) includes loop body B2. The two code segments are executed in two processor cores respectively, and these two work together to execute the function of loop body B.

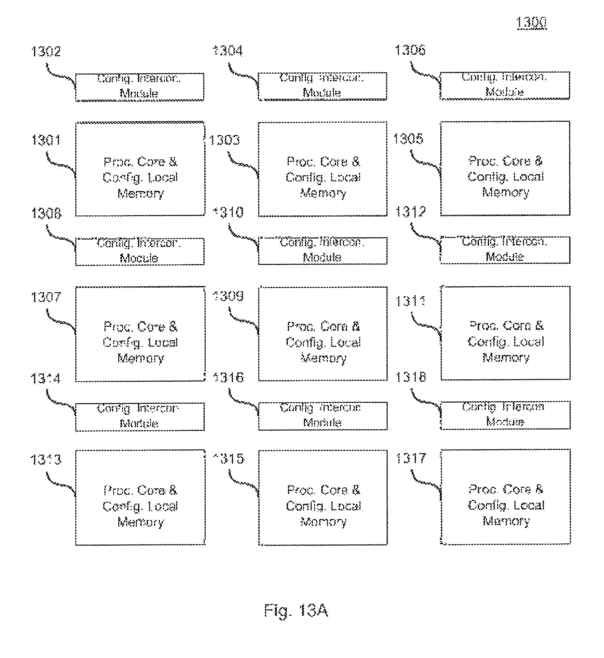

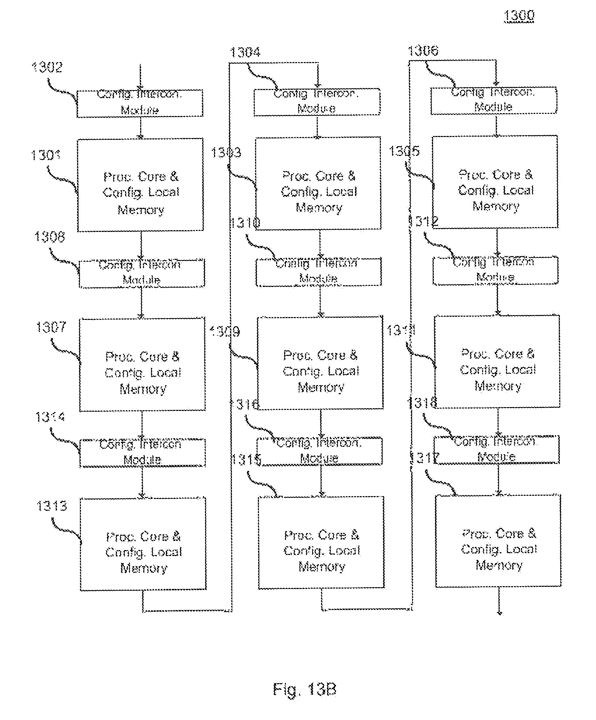

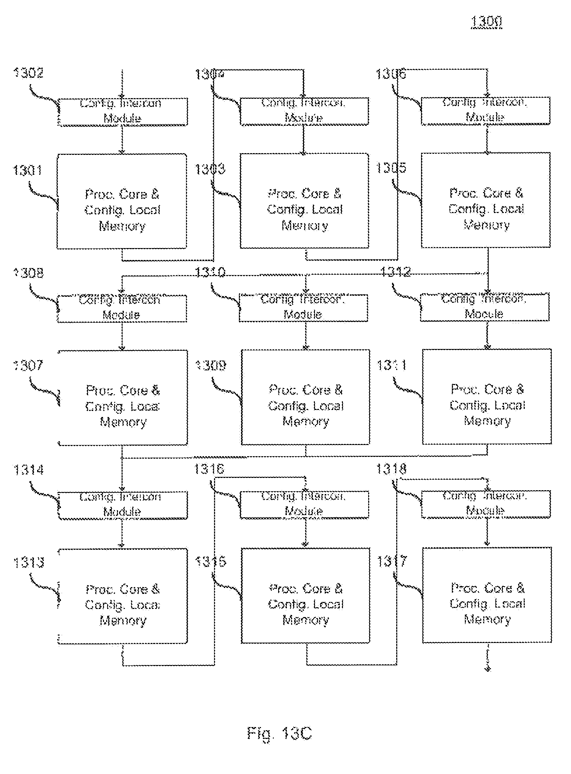

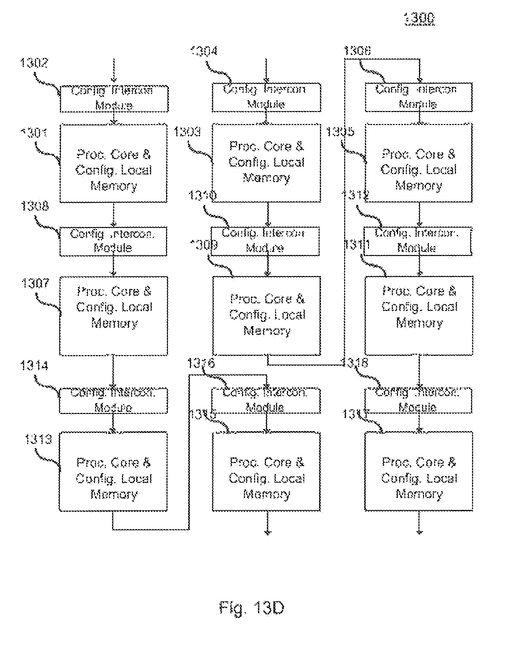

Figure 13(a) illustrates an exemplary block diagram of configurable multi-core structure consistent with the disclosed embodiments. Figure 13(b) shows an exemplary all serial configuration of multi-core structure. Figure 13(c) shows an exemplary combined serial and parallel configuration of multi-core structure. Figure 13(d) shows another exemplary configuration of multi-core structure.

As is shown in figure 13(a), multi-core structure may include a plural number of processor cores and configurable local memory (1301, 1303, 1305, 1307, 1309, 1311, 1313, 1315, and 1317). The multi-core structure may also include a plural number of configurable interconnect modules (CIM) (1302, 1304, 1306, 1308, 1310, 1312, 1314, 1316, and 1318). In certain embodiment, each processor core and associated configurable local memory may form one stage of the macro pipeline. That is, through the plural number of configurable interconnect modules (e.g.: 1302); multiple processor cores and corresponding configurable local memory (1301, 1303, 1305, 1307, 1309, 1311, 1313, 1315, and 1317) may be configured to constitute a serially-connected multi-core structure. Multiple serial connection structure may be independent with each other, and may be in part or in all relate to each other executing programs in serial, in parallel or in a mixed serial and parallel manner.

As is shown in figure 13(b), serial-connected multi-core structure may be formed by configuring the corresponding configurable interconnect modules. Processor core and configurable local memory (1301) may be the first stage, and processor core and configurable local memory (1317) may be the last stage of the macro pipeline of the serial-connected multi-core structure.

As is shown in figure 13(c), by configuring the corresponding configurable interconnect modules, processor cores and configurable local memory (1301, 1303, and 1305) form a serial-connected multi-core structure, and processor cores and configurable local memory (1313,1315, and 1317) also form a serial-connected multi-core structure. However, the processor cores and configurable local memory (1307, 1309, and 1311) form a parallel-connected multi-core structure. Further, these multi-core structures are connected to form a combined serial and parallel multi-core processor.

As is shown in figure 13(d), by configuring the corresponding configurable interconnect modules, processor cores and configurable local memory (1301, 1307, 1313, and 1315) form a serial-connected multi-core structure, while the processor cores and configurable local memory (1303, 1309, 1305, 1311, and 1317) form another serial-connected multi-core structure. These two multi-core structures operate independently.

## Claims

1. A method of data processing is used to perform program and generate result on multiple processor core; the processor refers a hard wire for performing operation and loading and storing data through executing instruction; wherein the method of data processing, comprising: (1) segmenting a program code which is executed on serial-connecting multi-core processor structure, such that the needed time which is executing segmented code segment on every core in the multi-core processor structure will be approximate the same; (2) when a program perform on the serial-connecting multi-core structure in the multi-core processor structure, the execution result of previous stage processor in the serial connection multi-core structure as a input send to current stage processor; in every unit time, every core in the serial connection multi-core structure may make a singularity of or a plurality of issues, and the plurality of processor cores operate in a macro pipeline to achieve a large number of issues, that is serial multi-issue: (3) when program perform on the serial connection multi-core structure in the multi-core processor structure, the internal pipeline of every core in this serial- connecting multi-core processor structure is as the first pipeline hierarchy, every core in this serial-connecting multi-core processor structure is as a macro pipeline segment to form the second pipeline hierarchy, the rest may be deduced by analogy, this concept of pipeline hierarchy may be extended to even higher levels.

2. The method of data processing according to claim 1, wherein: in order to generate the code segment perform on the processor in the multi-core processor structure, it except need a compiling process for converting source code of the program to object code of the program, it may perform pre-compiling, that is a program source code pre-compile before a compiling process, it may also perform post-compiling, that is according to the requirement, it allocate task content and workload to every core in the serial connecting multi-core processor structure, and use the task content and workload to segment the program code into a singularity of or a plurality of code segments.

3. The method of data processing according to claim 2, wherein the post-compile includes: (a) analyzing executable program code to generate front-end code stream; (b) scanning and analyzing front-end to obtain information such as execution cycles needed, any jump/branch and the jump/branch addresses, etc. This information and other information may be then analyzed to determine segment information (i.e., how to segment the compiled code) or based on the number of the instructions, the object code may be segmented into a plurality of code segments with equal or similar number of instructions; (c) the executable object code in post-compiling process may also be parsed to determine information such as a total instruction count and to generate code segments based on such information.

4. The method of data processing according to claim 3, wherein: the instruction being executed in every core not only includes the corresponding code segment which is segmented into smaller segment, but includes additional instructions which is not influence the function of original programs.

5. A configurable multi-core structure for executing a program, comprising: a plurality of processor cores; a plurality of configurable local memory respectively associated with the plurality of processor cores; and a plurality of configurable interconnect structures for serially interconnecting the plurality of processor cores, wherein: a processor core, as used herein, may be configured to perform operations and data read/write through executing instructions; configurable local memory may be configured to store instructions and data, to exchange data between processor cores; configurable interconnecting modules may be configured to interconnect the plurality of processor cores into different configurations or groups; the processor cores, configurable local memory and configurable mutual connection structure may be configured to constitute a singularity of or a plurality of serial-connecting multi-core structure base on the requirement of applications; every processor core in the serial connection muiti-core structure may be used to perform a part code segment of the program code respectively; all of the processor cores in the serial connection multi-core structure get together to realize the entire function of program code.

6. The configurable multi-core structure according to claim 5, wherein the structure further includes a singularity of or a plurality of extension modules; the extension modules comprising: shared memory for saving data in case of overflow of the configurable local memory and for transferring shared data between the processor cores; or direct memory access (DMA) for directing access to the configurable local memory by other modules in addition to the processor cores; or exception handling modules for handling exceptions in the processor cores and configurable local memory.

7. The multi-core structure according to claim 5, wherein: each processor core includes an execution unit and a program counter.

8. The multi-core structure according to claim 7, wherein: the processor further includes: extension modules; each processor core includes a register file.

9. The multi-core structure according to claim 5, wherein: every processor core has associated local memory, each configurable local memory includes an instruction memory and a configurable data memory.

10. The multi-core structure according to claim 9, wherein: in the same configurable local memory, the boundary between the instruction memory and configurable data memory is configurable.

11. The multi-core structure according to claim 9, wherein: the configurable data memory includes a plurality of sub-modules and the boundary between the sub-modules is configurable.

12. The multi-core structure according to claim 9, wherein: the configurable interconnect structures include connections between the processor cores and the configurable local memory, connections between the processor cores and the share memory, connections between the processor cores and the DMA controller, connections between the configurable local memory and the shared memory, connections between the configurable local memory and the DMA controller, connections between the configurable local memory and an external system, and connections between the shared memory and the external system.

13. The multi-core structure according to claim 12, wherein two processor cores and associated local memories may be formed a previous and current stage relationship base on the configuration, a part of or entire of processor cores and associated local memory may be formed to a singularity of or a plurality of serial connection structure through configurable Mutual connection structure. A plurality of serial connection structures may be independence separately and these structures may also have some relations partly or entirety. These structures may realize serial, parallel or combination of serial and parallel instruction execution.

14. The multi-core structure according to claim 12, wherein the serial, parallel or combination of serial and parallel instruction execution may be that, different serial connection structures under synchronous mechanism controlling perform different program segments and parallel execute different instructions and parallel execute multi-thread based on the requirement of applications; it may also be that, different serial connection structures under synchronous mechanism controlling perform the same program segments based on the requirement of applications, and it may also be that, using SIMD mode to execute denseness operation which has the same instruction and different data.

15. The multi-core structure according to claim 5, wherein: the multi-core structure has special data read policy; The first processor core is configured with a first read policy defining a first source for data input to the first processor core including one of the first configurable local memory, a shared memory, and external devices; and the source for data input to the other processor cores including the configurable local memory and associated configurable data memory of previous stage processor core,

16. The multi-core structure according to claim 5. wherein: the multi-core structure has special data write policy; the first processor core is configured with a first write policy defining a first destination for data output from the first stage processor core including the first configurable local memory, the shared memory, and the external devices; and the source for data input to the other processor cores and associated configurable data memories including one of the first configurable local memory, the configurable local memory of previous stage processor core and a shared memory; the second processor core is configured with a second write policy defining a second destination for data output from the first stage processor core including the second configurable local memory, the shared memory; when the extension memory has existed in the structure, the destination for data output may include extension memory.

17. The multi-core structure according to claim 15, 16, wherein: a plurality of multiplexers to select the first and second sources for data input to the processor cores and associated configurable memories.

18. The multi-core structure according to claim 15, 16, wherein: the first configurable local memory includes a plurality of data sub-modules to be accessed by the first processor core and the second processor core separately at the same time.

19. The multi-core structure according to claim 24, wherein: each of the first and second processor cores include a register file; and values of registers in the register file of the first processor core is transferred to corresponding registers in the register file of the second processor core during operation.

20. The multi-core structure according to claim 5, wherein: the second hierarchy macro pipeline is controlled by a back-pressure signal passed between two neighboring stages of the macro pipeline and passes the back pressure signal to a processor core at a previous stage to determine whether a previous stage is stalled; and according to its operation condition, determine whether the current stage pipeline is stalled, thus, the operation of the macro pipeline may be controlled.

21. The multi-core structure according to claim 5, wherein: the exception handling module may be formed by processor cores in the multi-core structure, and it may be formed by additional modules.

22. The multi-core structure according to claim 5, wherein: the configuration information may include the information of turning on or turning off the power of processor cores, configuring the size/boundary and content of instruction memory and data sub-memory in local memory and configuring the interconnection structure and relationship.

23. The multi-core structure according to claim 5, wherein the processor cores are configured to have a plurality of power management modes including: (a) a configuration level power management mode where a processor core not in operation is put in a low-power state; (b) an instruction level power management mode where a processor core waiting for a completion of data access is put in a low-power state; a incompletion of data may include the upper stage processor does not write the current stage processor needed data into the associated data sub-memory; (c) an application level power management mode, realizing by complete hardware, marching idle task character and ensuring the utilization rate of the current processor cores, according to a current utilization rate and a threshold, it may determine the processor whether turn into low-power state or turn back from tow-power state; the utilization rate may be fixed, and it may also be configured afresh or determined by self-learning; it may be burned into internal of the chip, written into the chip through the system when this structure is starting to work and it may also be written by software; the reference content which is used to match utilization rate may be burned into internal of the chip when the chip is manufacturing, written into the chip through system or software when this structure is starting to work and it may also be written by software; it may also be burned into by self-learning, the write mode may be single write and multiple writes; The low-power state may include decreasing the clock frequency of processor cutting off power supply.

24. The muiti-core structure according to claim 5, further including: a self-testing facility may perform self-test in adding power situation rather than depending on the external equipments; when the structure has self-test facility, a singularity of or a plurality of particular basic components, operation units or processor cores may be used as a comparator and a stimulate with particular relationship may be given to a plurality of the rest corresponding basic component, operation units or processor cores to compare whether the outputs of the other components in the structure is corresponding the specific relationship by the comparator.

25. The multi-core structure according to claim 24, wherein: any processor core has self-healing capability with a self-testing facility; any processor core that is not running normally is marked as invalid such that the marked-as-invalid processor core is not configured into the macro pipeline to achieve self-hearing capability.

26. The multi-core structure according to claim 1, wherein: the plurality of processor cores may have the same processor structures or have at least one of different processor structures.

27. The multi-core structure according to claim 5, wherein: the structure may have the characteristic of US (load induced store), when the second processor reads from an address for the first time, the second processor core reads from the first configurable local memory and stores read-out data in the second configurable local memory such that any subsequent access can be performed from the second configurable local memory to achieve load-induced-store (LIS) operation.

28. The multi-core structure according to claim 5, wherein: the structure may have pre-transfer characteristic; the processor core may load data from the local data memory associated with a previous stage processor core. The data is not needed to read and write in the current stage processor core but it is needed to load and store in the lower stage processor core, and then writes the data into the local data memory associated with the current stage processor core.

29. The multi-core structure according to claim 5, wherein: an entry in both the first configurable local memory and the second configurable local memory includes a data portion, a validity flag indicating whether the data portion is valid, and an ownership flag indicating whether the data is used by one of the first and second processor cores.

30. The multi-core structure according to claim 5, wherein; the processor core may access the local instruction memory of the other processor cores except itself; a plurality of processor cores may in parallel execute each code segment in the same code and in parallel execute each code segment in different code; a plurality of processor cores may serial execute each code segment in the same code and it may also serial execute each code segment in different code; a plurality of processor cores may combined in serial and parallel execute each code segment in the same code or each code segment in the different codes.

31. The multi-core structure according to claim 5, wherein: a singularity of or a plurality of local memories associated with processor cores may form a high performance multi-core connecting structure, then configure this structure and store the corresponding code segment into local instruction memories, such that the multi-core connecting structure may realize particular function: the multi-core connecting structure equal to the function modules in SOC; a plurality of functional modules connect by data transfer path between functional modules thus realize the SOC system; the data transfer path refers to the system bus in conventional SOC system.

32. The multi-core structure according to claim 31, wherein: though the configurable interconnecting structure, the inputs and outputs of a plurality of processor cores which have data transferring relationship with each other may pre-set or dynamic set a plurality of connections, thus multiple data paths between the bus connection modules to form a system bus, which is equal to the data path of system bus structure in conventional SOC system.

33. The multi-core structure according to claim 31, wherein: a processor core and associated local memory may be dynamic configured, and the code segment in the local memory may be dynamic changed, thus the function of SOC system may be changed.

34. The multi-core structure according to claim 7, wherein: the processor core has rapid conditional judgment mechanism to ensure whether the branch jump is executing or not; the rapid conditional judgment mechanism may be a counter to judge loop condition and a finite state machine (FSM) of judging branch jump and loop condition.

35. The multi-core structure according to claim 5, wherein: the processor core may associate with a plurality of local instruction memory; when one or more than one memories are used to response load instruction execution, the other local memory of local instruction memory may perform instruction update execution.

36. The multi-core structure according to claim 5, wherein: a plurality of processor cores may have the same clock frequency and also have different clock frequency.

37. The multi-core structure according to claim 5, wherein: the structure include a singularity of or a plurality of dedicated functional modules; the dedicated functional module may be as macro module called by the processor core and also as a independent processing module to receive the output of the processor core, and send the processing result to the same processor core; the processor cores for sending and receiving data may be the same processor core or the different processor cores.
